# EUROPÄISCHE PATENTSCHRIFT

(11) **EP 3 365 662 B1**
(45) Veröffentlichungstag und Bekanntmachung des Hinweises auf die Patenterteilung: **28.08.2019**
(21) Anmeldenummer: 16784453.9
(22) Anmeldetag: 14.10.2016
(51) Int. Cl.: G01N 21/64, G01J 3/44, G02B 21/00

(54) **VERFAHREN UND VORRICHTUNG ZUM HOCHAUFLÖSENDEN ABBILDEN EINER MIT FLUORESZENZMARKERN MARKIERTEN STRUKTUR EINER PROBE**
METHOD AND DEVICE FOR HIGH PRECISION IMAGING OF A STRUCTURE OF A SAMPLE MARKED WITH FLUORESCENCE MARKERS
PROCEDE ET DISPOSITIF DESTINE A LA REPRESENTATION HAUTE RESOLUTION D'UNE STRUCTURE MARQUEE DE MARQUEURS FLUORESCENTS D'UN ECHANTILLON

(30) Priorität: 23.10.2015 EP 15191304
(43) Veröffentlichungstag der Anmeldung: 29.08.2018
(73) Patentinhaber: Abberior Instruments GmbH, 37077 Göttingen (DE)
(72) Erfinder: SCHÖNLE, Andreas, 37085 Göttingen (DE); WURM, Christian, 37077 Göttingen (DE); HARKE, Benjamin, 37083 Göttingen (DE); DONNERT, Gerald, 37077 Göttingen (DE)
(74) Vertreter: REHBERG HÜPPE + PARTNER
(86) Internationale Anmeldenummer: PCT/EP2016/074763
(87) Internationale Veröffentlichungsnummer: WO 2017/067859

(56) Entgegenhaltungen:
- EP-A1- 2 246 724
- JP-A- 2011 237 616
- US-A1- 2010 208 955
- US-A1- 2010 214 430
- US-A1- 2011 036 993
- US-A1- 2012 181 936
- US-A1- 2014 029 091
- US-A1- 2015 115 176
- THORSTEN STAUDT ET AL: "Far-field optical nanoscopy with reduced number of state transition cycles", OPTICS EXPRESS, Bd. 19, Nr. 6, 14. März 2011 (2011-03-14), Seiten 5644-5657, XP055266062, DOI: 10.1364/OE.19.005644 in der Anmeldung erwähnt
- HOEBE R A ET AL: "Controlled light-exposure microscopy reduces photobleaching and phototoxicity in fluorescence live-cell imaging", NATURE BIOTECHNOLOGY, GALE GROUP INC, US, Bd. 25, Nr. 2, Februar 2007 (2007-02), Seiten 249-253, XP002576430, ISSN: 1087-0156, DOI: 10.1038/NBT1278 [gefunden am 2007-01-21]

## Beschreibung

### TECHNISCHES GEBIET DER ERFINDUNG

Die Erfindung betrifft ein Verfahren zum hochauflösenden Abbilden einer mit Fluoreszenzmarkern markierten Struktur einer Probe, wobei die Probe mit einer ein Intensitätsmaximum von fokussiertem Fluoreszenzanregungslicht umfassenden Lichtintensitätsverteilung beaufschlagt wird, wobei interessierende Teilbereiche der Probe mit der Lichtintensitätsverteilung abgetastet werden und wobei aus der Probe emittiertes Fluoreszenzlicht registriert und dem jeweiligen Ort der Lichtintensitätsverteilung zugeordnet wird. Weiterhin bezieht sich die Erfindung auf eine Vorrichtung zur Durchführung dieses Verfahrens.

Insbesondere bezieht sich die Erfindung auf ein solches Verfahren zum hochauflösenden Abbilden, bei dem die Lichtintensitätsverteilung, mit denen die interessierenden Teilbereiche der Probe abgetastet werden, neben dem Intensitätsmaximum des fokussierten Fluoreszenzanregungslichts ein damit überlagertes, von Intensitätsmaxima umgebenes Intensitätsminimum von fokussierten Fluoreszenzverhinderungslicht aufweist, so dass das Volumen der Probe, aus dem das registrierte Fluoreszenzlicht stammen kann, mit Hilfe des Fluoreszenzverhinderungslichts verkleinert wird. Insbesondere können die Abmessungen dieses Volumen und kann damit die räumliche Auflösung auf diese Weise unter die sogenannte Beugungsgrenze bei der Wellenlänge des Anregungslichts reduziert werden. Das Fluoreszenzverhinderungslicht kann die Fluoreszenz der Fluoreszenzmarker, mit denen die interessierte Struktur der Probe markiert ist, auf unterschiedliche Weise verhindern, insbesondere durch stimulierte Emission bei der STED-Fluoreszenzmikroskopie oder durch Überführen der Fluoreszenzmarker in einen nicht fluoreszenzfähigen Dunkelzustand, wie beispielsweise bei der RESOLFT-Fluoreszenzmikroskopie mit schaltbaren Fluorophoren.

Bei dem erfindungsgemäßen Verfahren besteht durch das Beaufschlagen der Probe mit der Lichtintensitätsverteilung die Gefahr, dass die Probe durch Einwirkung der Lichtintensitätsverteilung verändert wird. Eine offensichtliche Veränderung der Probe kann darin bestehen, dass die Fluoreszenzmarker, mit denen die abzubildende Struktur markiert ist, gebleicht, d. h. dauerhaft inaktiviert werden. Die dem Bleichen der Fluoreszenzmarker zugrunde liegenden photochemischen Prozesse wirken sich aber auch auf andere Bestandteile der Probe aus. Insbesondere lebende biologische Proben können durch die Einwirkung der Lichtintensitätsverteilung beschädigt oder gar abgetötet werden.

Die Gefahr, dass die Probe durch Einwirkung der Lichtintensitätsverteilung verändert wird, steigt mit der Lichtintensität in der Lichtintensitätsverteilung und der Lichtdosis, mit der die Probe beaufschlagt wird. Bei der Verwendung von Fluoreszenzverhinderungslicht, das durch stimulierte Emission von mit dem Anregungslicht angeregten Fluoreszenzmarker wirkt, sind die Lichtintensitäten in der Lichtintensitätsverteilung notwendigerweise besonders hoch. Entsprechend ist auch die Gefahr von unerwünschten Auswirkungen auf die Probe besonders hoch. Umgekehrt ist die STED-Fluoreszenzmikroskopie geeignet, eine mit Fluoreszenzmarkern markierte Struktur in einer Probe in sehr kurzer Zeit abzubilden, was für sich ändernde Proben, wie insbesondere lebende biologische Proben, von besonderem Interesse ist.

### STAND DER TECHNIK

Aus R A Hoebe et al.: Controlled light-exposure microscopy reduces photobleaching and phototoxicity in fluorescence live-cell imaging, Nature Biotechnology, Volume 25, Number 2, February 2007, Seiten 249 bis 253 ist ein Verfahren zum hochauflösenden Abbilden einer mit Fluoreszenzmarkern markierten Struktur einer Probe bekannt, bei dem die Probe mit einer ein Intensitätsmaximum von fokussiertem Fluoreszenzanregungslicht umfassenden Lichtintensitätsverteilung beaufschlagt wird, wobei interessierende Teilbereiche der Probe mit der Lichtintensitätsverteilung abgetastet werden und wobei aus der Probe emittiertes Fluoreszenzlicht registriert und dem jeweiligen Ort der Lichtintensitätsverteilung zugeordnet wird, und wobei das Beaufschlagen der Probe mit der Lichtintensitätsverteilung für den jeweiligen Ort abgebrochen wird, wenn eine vorgegebene Maximallichtmenge des aus der Probe emittierten Fluoreszenzlichts registriert worden ist oder schon zuvor, wenn binnen einer vorgegebenen Zeitspanne eine vorgegebene Minimallichtmenge des aus der Probe emittierten Fluoreszenzlichts nicht registriert worden ist. Auf diese Weise wird die Beaufschlagung der Probe mit der Lichtintensitätsverteilung gegenüber einer gleich langen Beaufschlagung an allen Orten überall dort eingeschränkt, wo sich relativ viel Fluoreszenzmarker oder keine Fluoreszenzmarker in der Probe befinden. Die Lichtdosis, mit der die Probe für die Aufnahme eines Bilds der mit den Fluoreszenzmarkern markierten Struktur beaufschlagt wird, kann dadurch deutlich abgesenkt werden. Das Abbrechen des Beaufschlagens der Probe mit der Lichtintensitätsverteilung erfolgt bei dem bekannten Verfahren durch Ansteuern eines akusto-optischen Modulators im Strahlengang des von einem Laser kommenden Fluoreszenzanregungslichts, der in Abhängigkeit von dem Lichtsignal eines zum Registrieren des Fluoreszenzlichts verwendeten Detektor angesteuert wird.

R. A. Hoebe et al. beschreiben auch, wie der Effekt eines doch auftretenden Bleichens der Fluoreszenzmarker korrigiert werden kann. Dazu wird die Lichtdosis, mit der die Pixel einer Probe beaufschlagt werden, bestimmt und zum Korrigieren der Intensität des registrierten Fluoreszenzlichts verwendet.

In einer Abbildung dokumentieren Hoebe et al. die akkumulierten Lichtdosen, die jedes einzelne Pixel in der Fokusebene erhalten hat, nachdem in das gesamte Volumen einer Probe abgetastet wurde, wobei die jeweilige Lichtdosis in falschen Farben dargestellt ist.

Aus T. Staudt et al.: Far-field optical nanoscopy with reduced number of state transition cycles, Optics Express Vol. 19, No. 6 , 14 March 2011, Seiten 5644 bis 5657 ist ein auch als RESCue-STED bezeichnetes Verfahren zum hochauflösenden Abbilden einer mit Fluoreszenzmarkern markierten Struktur einer Probe bekannt. Hier wird die Probe mit einer Lichtintensitätsverteilung beaufschlagt, bei der ein Intensitätsmaximum von fokussiertem Fluoreszenzanregungslicht mit einem von Intensitätsmaxima in Form eines Donuts umgebenen Intensitätsminimum von fokussiertem Fluoreszenzverhinderungslicht überlagert ist. Dabei werden interessierende Teile der Probe mit dem Intensitätsminimum des fokussierten Fluoreszenzverhinderungslichts abgetastet, und aus der Probe emittiertes Fluoreszenzlicht wird registriert und dem jeweiligen Ort des Intensitätsminimums des fokussierten Fluoreszenzverhinderungslichts in der Probe zugeordnet. Das Beaufschlagen der Probe mit der Lichtintensitätsverteilung aus dem fokussierten Fluoreszenzanregungslicht und dem fokussierten Fluoreszenzverhinderungslicht wird für den jeweiligen Ort des Intensitätsminimums des fokussierten Fluoreszenzverhinderungslichts abgebrochen, wenn eine vorgegebene Maximalmenge des aus der Probe emittierten Fluoreszenzlichts registriert worden ist oder wenn bereits zuvor binnen einer vorgegebenen Zeitspanne eine vorgegebene Minimallichtmenge des aus der Probe emittierten Fluoreszenzlichts noch nicht registriert worden ist. Hierdurch wird die Anzahl der Zyklen von Anregung und Abregung, die die Fluoreszenzmarker in der Probe beim Aufnehmen eines Bilds der Probe durchlaufen, und damit die Gefahr des Bleichens der Fluoreszenzmarker reduziert.

T. Staudt et al. beschreiben auch eine alternative Weise des Implementierens einer RESCue-Strategie, bei der eine Vorabinformation über den Ort der Fluoreszenzmarker benutzt wird, um direkt die Koordinaten anzufahren, an denen eine Fluoreszenzverhinderung benötigt wird, und die Orte auszulassen, wo sie ohne Funktion wäre. Beispielsweise wird vorgeschlagen, ein zuerst ein Bild niedrigerer Auflösung aufzunehmen, um grobe Informationen über die räumliche Struktur und die Merkmalsdichte in der Probe zu erhalten. Einige Merkmale werden dann eher isoliert und andere dicht gepackt sein. Man kann dann (sukzessive) eine höhere räumliche Auflösung anwenden und sich gezielt auf Bereiche konzentrieren, in denen dichte Merkmale aufzulösen sind. Zugleich könnte man Koordinaten auslassen, an denen keine Objekte getrennt werden müssen und entsprechend kein Ausschalten erforderlich ist. Die Vorinformationen über die Dichte der Fluoreszenzmarker oder der Merkmale kann von der Helligkeit erhalten werden.

Auf beide Weisen wird es ermöglicht, sich ändernde Proben wiederholt abzubilden oder Bilder derselben Probe längs eng benachbarter paralleler Schnitte aufzunehmen.

Bei beiden bekannten Verfahren wird die Konzentration der Fluoreszenzmarker an dem jeweiligen Ort der Probe aus dem Quotienten aus der gemessenen Lichtmenge und zugehörigen Dauer des Beaufschlagens der Probe mit der Intensitätslichtverteilung bestimmt, weil diese Dauer anders als bei der herkömmlichen Laser-Scanning-Fluoreszenzmikroskopie, bei der die Probe an jedem Ort für einen gleich langen Zeitraum beaufschlagt wird, von Ort zu Ort variiert.

### AUFGABE DER ERFINDUNG

Der Erfindung liegt die Aufgabe zugrunde, ein Verfahren zum hochauflösenden Abbilden einer mit Fluoreszenzmarkern markierten Struktur einer Probe und eine Vorrichtung zur Durchführung dieses Verfahrens aufzuzeigen, mit denen die Lichtdosis, mit der eine Probe zum Aufnehmen eines Bilds beaufschlagt wird, bezogen auf eine gewünschte Bildqualität noch weiter reduziert werden kann.

### LÖSUNG

Die Aufgabe der Erfindung wird durch die Verfahren mit den Merkmalen der nebengeordneten Patentansprüche 1 und 2 sowie die Vorrichtung nach Anspruch 14 gelöst. Bevorzugte Ausführungsformen der erfindungsgemäßen Verfahren sind in den abhängigen Verfahrensansprüchen 3 bis 13 definiert.

### BESCHREIBUNG DER ERFINDUNG

Bei dem erfindungsgemäßen Verfahren zum hochauflösenden Abbilden einer mit Fluoreszenzmarkern markierten Struktur einer Probe wird die Probe mit einer Lichtintensitätsverteilung beaufschlagt, bei der ein Intensitätsmaximum von fokussiertem Fluoreszenzanregungslicht mit einem von Intensitätsmaxima umgebenen Intensitätsminimum von fokussiertem Fluoreszenzverhinderungslicht überlagert ist. Das "Fluoreszenzanregungslicht" wird hier auch kurz als "Anregungslicht" bezeichnet. Der bei den "Intensitätsmaxima" verwendete Plural soll dabei ausdrücklich keine Teillichtintensitätsverteilung des Fluoreszenzverhinderungslichts ausschließen, bei dem das Intensitätsminimum von einem ringförmigen Intensitätsmaximum umschlossen ist. Auch diese Lichtintensitätsverteilung zeigt in jedem Schnitt längs der optischen Achse jeweils ein Intensitätsmaximum auf jeder Seite des Intensitätsminimums des Fluoreszenzverhinderungslichts.

Bei dem erfindungsgemäßen Verfahren werden selektiv interessierende Teilbereiche der Probe mit dem Intensitätsminimum des fokussierten Fluoreszenzverhinderungslichts abgetastet, wobei aus der Probe emittiertes Fluoreszenzlicht registriert und dem jeweiligen Ort des Intensitätsminimums des fokussierten Fluoreszenzverhinderungslichts in der Probe als Maß für die Konzentration der Fluoreszenzmarker an dem jeweiligen Ort zugeordnet wird. Zumindest das Beaufschlagen der Probe mit dem fokussierten Fluoreszenzverhinderungslicht der Lichtintensitätsverteilung wird für den jeweiligen Ort des Intensitätsminimums des fokussierten Fluoreszenzverhinderungslichts abgebrochen, wenn eine vorgegebene Maximallichtmenge des aus der Probe emittierten Fluoreszenzlichts registriert worden ist und/oder wenn binnen einer vorgegebenen Zeitspanne eine vorgegebene Minimallichtmenge des aus der Probe emittierten Fluoreszenzlichts noch nicht registriert worden ist. Das zwischen den beiden vorgenannten Bedingungen für das Abbrechen des Beaufschlagens der Probe mit zumindest einem Teil der Lichtintensitätsverteilung stehende "und/oder" weist darauf hin, dass bei dem erfindungsgemäßen Verfahren das an dem jeweiligen Ort registrierte Fluoreszenzlicht entweder nur auf das Erfüllen des einen Kriteriums oder nur das Erfüllen des anderen Kriteriums oder auf das Erfüllen beider Kriterien überwacht wird.

Bei dem erfindungsgemäßen Verfahren werden die interessierenden Teilbereiche der Probe, die allein mit der vollen, das fokussierte Anregungslicht und das fokussierte Fluoreszenzverhinderungslicht umfassenden Lichtintensitätsverteilung abgetastet werden, selektiert, indem fokussiertes Fluoreszenzanregungslicht ohne Fluoreszenzverhinderungslicht auf die Probe gerichtet wird, wobei aus der Probe emittiertes Fluoreszenzlicht registriert wird und wobei ein Teilbereich der Probe als interessierender Teilbereich definiert wird, wenn für diesen binnen einer vorgegebenen Testzeitspanne eine vorgegebene Mindestlichtmenge des aus der Probe emittierten Fluoreszenzlichts registriert worden ist. Anders gesagt wird ein Teilbereich, der zunächst nur mit Fluoreszenzanregungslicht beaufschlagt wird, zu einem interessierenden Teilbereich erklärt, der dann mit der vollen Lichtintensitätsverteilung aus Anregungslicht und Fluoreszenzverhinderungslicht beaufschlagt wird, wenn für diesen Teilbereich - zumindest ohne das typischerweise eine sehr hohe Lichtintensität aufweisende Fluoreszenzverhinderungslicht - eine Mindestfluoreszenzaktivität festgestellt wird. Wenn diese Mindestfluoreszenzaktivität schon ohne das Fluoreszenzverhinderungslicht nicht vorliegt, wird sie mit dem Fluoreszenzverhinderungslicht auch nicht gegeben sein. Insoweit ist es dann sinnlos, den jeweiligen Teilbereich mit dem Minimum des Fluoreszenzverhinderungslichts abzutasten und dabei die Umgebung des Intensitätsminimums des Fluoreszenzverhinderungslichts mit den hohen Intensitäten der Intensitätsmaxima des Fluoreszenzverhinderungslichts zu belasten. Große Bereiche der Probe werden bei dem erfindungsgemäßen Verfahren daher nur mit dem Fluoreszenzanregungslicht beaufschlagt. Das Fluoreszenzverhinderungslicht bleibt ganz den interessierenden Teilbereichen der Probe vorbehalten, wo es zur Erhöhung der Ortsauflösung benötigt wird. Die Lichtdosis, mit der die Probe insgesamt belastet wird, um ein Bild aufzunehmen, kann damit gegenüber den bekannten Verfahren noch einmal ganz erheblich reduziert werden.

In einer ersten konkreten Ausführungsform des erfindungsgemäßen Verfahrens wird die Probe mit dem fokussierten Fluoreszenzanregungslicht in Schritten mit auf die Abmessung des Intensitätsminimums des fokussierten Fluoreszenzverhinderungslichts abgestimmten Schrittweiten abgetastet, wobei das Fluoreszenzverhinderungslicht in jedem Schritt nur dann zugeschaltet wird, wenn die vorgegebene Mindestlichtmenge des aus der Probe emittierten Fluoreszenzlichts binnen der vorgegebenen Testzeitspanne registriert worden ist. Anders gesagt wird die Probe in jedem Pixel, d. h. an jedem Ort, zunächst nur mit dem Fluoreszenzanregungslicht beaufschlagt, und das Fluoreszenzverhinderungslicht wird nur dann zugeschaltet, wenn aufgrund des Fluoreszenzanregungslichts überhaupt Fluoreszenzaktivität registriert wird. Ansonsten unterbleibt das Zuschalten des Fluoreszenzverhinderungslichts für den jeweiligen Pixel und auch das Fluoreszenzanregungslicht kann abgeschaltet werden, bis der nächste Pixel, d. h. Ort erreicht ist.

In einer zweiten konkreten Ausführungsform des erfindungsgemäßen Verfahrens wird das fokussierte Fluoreszenzanregungslicht ohne Fluoreszenzverhinderungslicht direkt nacheinander auf in einer Abtastrichtung beim Abtasten der Probe hintereinander liegende Teilbereiche der Probe gerichtet, und die Probe wird anschließend über die Teilbereiche hinweg abgetastet, wobei ein Beaufschlagen der Probe mit der das Fluoreszenzverhinderungslicht umfassenden Lichtintensitätsverteilung nur in den interessierenden Teilbereichen erfolgt. Bei dieser Ausführungsform des erfindungsgemäßen Verfahrens wird zunächst eine Zeile der Probe nur mit dem Fluoreszenzanregungslicht abgetastet. Dann werden die Abschnitte der Zeile der Probe, in denen bei diesem ersten Abtasten Fluoreszenzaktivität festgestellt wurde, mit der das Fluoreszenzverhinderungslicht umfassenden Lichtintensitätsverteilung abgetastet, während für die anderen Abschnitte der Zeile zumindest das Fluoreszenzverhinderungslicht ausgeblendet wird. Optional kann die Probe beim anschließenden Abtasten über die Teilbereiche hinweg in mehreren quer zu der Abtastrichtung nebeneinander liegenden Zeilen abgetastet werden, so dass nicht jede Zeile des feinen Rasters beim Abtasten mit dem Intensitätsminimum des fokussierten Fluoreszenzverhinderungslichts der Lichtintensitätsverteilung zuvor mit dem nicht eingeengten fokussierten Fluoreszenzanregungslicht abgetastet wird, um die interessierenden Teilbereiche der Probe festzustellen, sondern beispielsweise nur jede zweite bis zehnte Zeile des feinen Rasters.

Das zum Selektieren der interessierenden Teilbereiche der Probe verwendete Fluoreszenzanregungslicht kann dasselbe Fluoreszenzanregungslicht sein, d. h. dieselbe Wellenlänge aufweisen wie das Fluoreszenzanregungslicht, das mit dem Fluoreszenzverhinderungslicht zu der Lichtintensitätsverteilung überlagert wird. Es kann sich aber auch um Fluoreszenzanregungslicht einer anderen Wellenlänge handeln, mit dem ein anderer Fluoreszenzmarker, der zusammen mit dem von dem anderen Fluoreszenzanregungslicht angeregten Fluoreszenzmarker auftritt, zur Emission von Fluoreszenzlicht anregt wird. Auf diese Weise wird erreicht, dass beim Ermitteln der interessierenden Teilbereich der Probe die später beim Abbilden der markierten Struktur verwendeten Fluoreszenzmarker noch keinerlei Belastung erfahren.

Bei einer ersten möglichen Ergänzung zu dem erfindungsgemäßen Verfahren wird zumindest das Beaufschlagen der Probe mit einem Teil der Lichtintensitätsverteilung auch noch dann für den jeweiligen Ort abgebrochen, wenn binnen mindestens einer vorgegebenen weiteren Zeitspanne, die länger als die Zeitspanne ist, eine weitere vorgegebene Minimalmenge des aus der Probe emittierten Fluoreszenzlichts, die größer als die vorgegebene Minimalmenge ist, noch nicht registriert worden ist. Mit anderen Worten werden dafür, ob es sich lohnt, die Probe an dem jeweiligen Ort mit der Intensitätsverteilung weiter zu beaufschlagen und entsprechend zu belasten, mehrere ansteigende Grenzwerte, die mehreren ansteigenden Zeitspannen zugeordnet sind, festgelegt. Auf diese Weise wird das Beaufschlagen der Probe mit der Lichtintensitätsverteilung an dem jeweiligen Ort nicht nur dann unterbrochen, wenn binnen der ersten Zeitspanne beispielsweise gar kein oder sehr wenig Fluoreszenzlicht registriert wurde, sondern auch dann, wenn sich das bislang registrierte Fluoreszenzlicht innerhalb der längeren zweiten Zeitspanne noch nicht zu einer signifikanten Lichtmenge aufaddiert hat. Auch auf diese Weise wird die Lichtdosis, mit der die Probe zur Aufnahme eines Bilds der Struktur belastet wird, weiter reduziert.

Bei der ersten möglichen Ergänzung zu dem erfindungsgemäßen Verfahren kann zumindest das Beaufschlagen der Probe mit einem Teil der Lichtintensitätsverteilung für den jeweiligen Ort der Probe auch dann abgebrochen werden, wenn bereits eine vorgegebene Maximallichtmenge des aus der Probe emittierten Fluoreszenzlicht registriert worden ist.

Bei einer zweiten möglichen Ergänzung zu dem erfindungsgemäßen Verfahren wird über mehrere Wiederholungen des Abtastens der interessierenden Teilbereiche hinweg mindestens eine der vorgegebenen Maximal- und/oder Minimalmengen reduziert. Bei dem erfindungsgemäßen Verfahren wird zwar die Lichtdosis, mit der die Probe für die Aufnahme jedes Bilds belastet wird, klein gehalten. Im Bereich der mit den Fluoreszenzmarkern markierten Struktur, d. h. in den interessierenden Bereichen erfolgt aber dennoch eine nicht unerhebliche photochemische Belastung der Fluoreszenzmarker. Diese führt bei den Fluoreszenzmarkern zu einem mehr oder weniger großen anteiligen, d. h. prozentualen Bleichen bei der Aufnahme jedes Bilds. Das heißt, die Struktur ist mit immer weniger noch aktiven Fluoreszenzmarkern markiert. Durch das Reduzieren der vorgegebenen Maximal- und/oder Minimalmengen wird dafür Sorge getragen, dass die Struktur dennoch in jedem Bild gleich sicher erkannt wird und zugleich das Potential beim Reduzieren der Lichtdosis maximiert wird. Ähnlich wie Wiederholungen des Abtastens der interessierenden Teilbereiche wirken sich mehrere nacheinander abgetastete parallele Ebenen der Probe, d. h. parallele Schnitte durch die Probe, insbesondere mehrere nacheinander abgetastete x-y-Ebenen der Probe, die unterschiedliche z-Lagen aufweisen, aus. Hier wirkt sich die Lichtintensitätsverteilung, mit der die Probe beim Aufnehmen des Bilds der einen Ebene beaufschlagt wurde, auch bleichend auf die Fluoreszenzmarker in den anderen Ebenen aus. So ist es auch hier sinnvoll, mindestens eine der vorgegebenen Maximal- und/oder Minimalmengen zu reduzieren.

Alternativ oder zusätzlich zu dem Reduzieren der Minimallichtmenge kann bei der zweiten möglichen Ergänzung zu dem erfindungsgemäßen Verfahren auch die zugehörige vorgegebene Zeitspanne erhöht werden. In jedem Fall wird durch das Reduzieren der Minimallichtmenge und/oder das Erhöhen der vorgegeben Zeitspanne sichergestellt, dass auch eine durch Bleichen reduzierte Konzentration der Fluoreszenzmarker an dem jeweiligen Ort der Lichtintensitätsverteilung sicher erkannt und das Beaufschlagen der Probe mit der Lichtintensitätsverteilung für den jeweiligen Ort der Probe nicht verfrüht abgebrochen wird.

Konkret kann die jeweilige Maximal- und/oder Minimallichtmenge gemäß einer Exponentialfunktion reduziert und/oder die vorgegebene Zeitspanne gemäß einer Exponentialfunktion erhöht werden. Der Exponent der Exponentialfunktion kann an die aktuellen Verfahrensbedingungen angepasst werden, d. h. an die Fluoreszenzmarker, insbesondere ihre Neigung zum Bleichen, und die Zusammensetzung und die absoluten Lichtintensitäten der Lichtintensitätsverteilung. Soweit diese Bedingungen gleich bleiben, bedarf der Exponent der Exponentialfunktion in der Regel keiner fortlaufenden Anpassung.

Bei einer dritten möglichen Ergänzung zu dem erfindungsgemäßen Verfahren wird eine Lichtdosis, die durch das Abbrechen des Beaufschlagens der Probe mit zumindest einem Teil der Lichtintensitätsverteilung für den jeweiligen Ort und/oder durch ein Nichtbeaufschlagen von nicht interessierenden Teilbereichen der Probe mit der Lichtintensitätsverteilung gegenüber einem Beaufschlagen der Probe mit der Lichtintensitätsverteilung an jedem Ort für einen vorgegebenen Zeitraum eingespart wird, wird erfasst und angezeigt. Die Anzeige der eingesparten Lichtdosis erleichtert es dem Anwender der dritten möglichen Ergänzung zu dem erfindungsgemäßen Verfahren, eine Verfahrensoptimierung vorzunehmen. Diese Verfahrensoptimierung ist zwischen einer maximalen Qualität der aufgenommenen Bilder und einer minimalen Lichtdosis, mit der die Probe beaufschlagt wird, d. h. einer maximalen eingesparten Lichtdosis, vorzunehmen.

Die Lichtdosis, die gegenüber einem Beaufschlagen der Probe mit der Lichtintensitätsverteilung an jedem Ort für einen vorgegebenen festen Zeitraum eingespart und erfindungsgemäß angezeigt wird, kann die über das zuletzt aufgenommene Bild hinweg eingesparte Lichtdosis sein, es kann auch die in einem laufenden Zeitfenster eingesparte Lichtdosis sein, wobei die Größe des laufenden Zeitfensters gleich der Dauer der Aufnahme eines Bilds sein kann, oder es kann die seit dem Beginn des Beaufschlagens der Probe mit der Lichtintensitätsverteilung insgesamt eingesparte Lichtdosis sein. Auch andere Festlegungen, für welchen Zeitraum die eingesparte Lichtmenge angezeigt wird, sind möglich. Relativ kurze Zeiträume, vorzugsweise aber mindestens von der Dauer der Aufnahme eines Bilds sind sinnvoll, um die Verfahrensoptimierung zu betreiben, weil sich der angezeigte Wert mit geänderten Verfahrensbedingungen schneller ändert als dann, wenn beispielsweise die seit dem Beginn des Beaufschlagens der Probe eingesparte Lichtdosis angezeigt wird. Die eingesparte Lichtdosis kann zum Beispiel als absoluter Wert oder als Prozentsatz der sich beim Beaufschlagen der Probe mit der Lichtintensitätsverteilung an jedem Ort für einen vorgegebenen festen Zeitraum ergebenden Lichtdosis angezeigt werden.

Wenn zumindest das Beaufschlagen der Probe mit einem Teil der Lichtintensitätsverteilung für den jeweiligen Ort beim Erfüllen bestimmter Kriterien abgebrochen wird, ist dieser Teil der Lichtintensitätsverteilung sinnvollerweise das fokussierte Fluoreszenzverhinderungslicht.

Mit dem fokussierten Fluoreszenzverhinderungslicht wird die räumliche Auflösung beim Abbilden der mit den Fluoreszenzmarkern markierten Struktur in der Probe erhöht.

Bei dem erfindungsgemäßen Verfahren kann eine Lichtdosis, die durch das Abbrechen des Beaufschlagens der Probe mit zumindest einem Teil der Lichtintensitätsverteilung an dem jeweiligen Ort und/oder durch ein Nichtbeaufschlagen von nicht interessierenden Teilbereichen der Probe mit der Lichtintensitätsverteilung gegenüber einem Beaufschlagen der Probe mit der Lichtintensitätsverteilung über alle Orte der Probe hinweg für einen vorgegebenen Zeitraum insgesamt eingespart wird, erfasst und durch Abstimmen mindestens einer der vorgegebenen Minimal- und/oder Maximallichtmengen und/oder der zu der Minimallichtmenge zugehörigen vorgegebenen Zeitspanne optimiert werden. Dieses Optimieren kann manuell oder auch automatisiert anhand vorgegebener Optimierungsfunktionen erfolgen.

Bei dem erfindungsgemäßen Verfahren kann mindestens eine der vorgegebenen Minimal- und/oder Maximallichtmengen und/oder die zu der vorgegebenen Minimalmenge zugehörige Zeitspanne abhängig davon festgelegt werden, wie groß eine Lichtleistung des an benachbarten Orten der Lichtintensitätsverteilung, insbesondere des an benachbarten Orten des Intensitätsminimums des fokussierten Fluoreszenzverhinderungslichts registrierten Fluoreszenzlichts ist. Die Wahrscheinlichkeit, dass zwei dunkle Orte oder zwei helle Orte aufeinander folgen ist viel größer, als dass ein heller auf einen dunklen Ort folgt oder umgekehrt. Entsprechend ist es an einem neuen Ort nach einem dunklen Ort weniger erfolgversprechend, auf eine bestimmte Lichtmenge an Fluoreszenzlicht zu warten, als an einem neuen Ort nach einem hellen Ort. Dies kann bei der Festlegung der Minimal- und/oder Maximallichtmengen ebenso wie bei den zugehörigen Zeitspannen berücksichtigt werden, um die eingesparte Lichtdosis weiter zu optimieren.

Auch bei dem erfindungsgemäßen Verfahren wird das Beaufschlagen der Probe mit der Lichtintensitätsverteilung für den jeweiligen Ort nicht immer nach einem der Kriterien abgebrochen, dass die vorgegebene Maximallichtmenge des aus der Probe emittierten Fluoreszenzlichts registriert worden ist oder binnen der vorgegebenen Zeitspanne die vorgegebene Minimallichtmenge des aus der Probe emittierten Fluoreszenzlichts noch nicht registriert worden ist. Dann erfolgt das Abbrechen der Beaufschlagung durch Fortschreiten des Abtastens der Probe mit der Lichtintensitätsverteilung, wenn ein vorgegebener Zeitraum vorüber ist, der der maximalen Belichtung des jeweiligen Orts bei dem erfindungsgemäßen Verfahren entspricht. Dieser Zeitraum ist typischerweise fest. Wenn er zu kurz gewählt wird, wird die vorgegebene Maximallichtmenge, die einem gewünschten Signal zu Rauschen-Verhältnis entspricht, nur selten erreicht. Wenn er zu lang gewählt wird, dauert das Abtasten der Probe zum Aufnehmen eines Bilds unnötig lang. Bei dem erfindungsgemäßen Verfahren wird jedoch eine überhöhte Lichtdosis, mit der die Probe beaufschlagt wird, auch bei einem zu langen Zeitraum verhindert. Günstig kann es sein, wenn der vorgegebene Zeitraum so lang gewählt wird, dass im Regelfall die vorgegebene Maximallichtmenge erreicht wird, wenn das Beaufschlagen der Probe mit der Lichtintensitätsverteilung an dem jeweiligen Ort nicht vorher schon unterbrochen wurde, weil die Minimallichtmenge innerhalb der vorgegebenen Zeitspanne nicht erreicht wurde. Dann kann die Konzentration des Fluoreszenzmarkers an dem jeweiligen Ort in der Regel mit dem gewünschten Rauschabstand aus der zum Erreichen der Maximallichtmenge benötigten Zeit bestimmt werden. Praktisch kann das Beaufschlagen der Probe mit zumindest einem Teil der Lichtintensitätsverteilung für den jeweiligen Ort abgebrochen werden, indem die Lichtintensitätsverteilung bzw. ihr jeweiliger Teil gegenüber der Probe verlagert wird oder indem das Beaufschlagen der Probe mit der Lichtintensitätsverteilung oder ihrem jeweiligen Teil insgesamt unterbrochen wird. Mit dem Verlagern der Lichtintensitätsverteilung gegenüber der Probe ist dabei ein sofortiges Fortschreiten des Abtastens der Probe zu dem nächsten Ort gemeint. Mit dem insgesamt Unterbrechen des Beaufschlagens der Probe mit der Lichtintensitätsverteilung oder des Teils davon ist hingegen gemeint, dass das Abtasten der Probe zwar noch nicht fortschreitet, aber die Probe an dem jeweiligen Ort nicht weiter mit der Lichtintensitätsverteilung oder ihrem Teil beaufschlagt wird. Egal, ob das Beaufschlagen der Probe mit der gesamten oder nur einem Teil der Lichtintensitätsverteilung unterbrochen wird, kann der Detektor für den Rest der Zeitraums, bis das Abtasten der Probe zu dem nächsten Ort fortschreitet eingeschaltet bleiben. Wenn nur ein Teil der Lichtintensitätsverteilung unterbrochen wird, erfasst der Detektor zwar weiteres Fluoreszenzlicht, die für den jeweiligen Ort bestimmte Konzentration der Fluoreszenzmarker ist aber null oder vernachlässigbar, wenn die Minimallichtmenge nicht in der zugehörigen Zeitspanne erreicht wurde, oder sie entspricht dem Quotienten aus der Maximallichtmenge und der zu deren Registrieren benötigten Zeit. Die von dem Detektor an einem Ort insgesamt registrierte Lichtmenge ist nur entscheidend, wenn das Beaufschlagen der Probe an dem jeweiligen Ort auch nicht teilweise abgebrochen wird.

Bei dem erfindungsgemäßen Verfahren kann eine Entscheidung über das Abbrechen des Beaufschlagens der Probe mit zumindest einem Teil der Lichtintensitätsverteilung an dem jeweiligen Ort von einer in einem Field Programmable Gate Array programmierten Logik gefällt werden. Der typische maximale Zeitraum für den ein Pixel belichtet wird, d. h. die so genannte Pixel Dwell Time liegt typischerweise im Bereich von mehreren 100 Nanosekunden bis mehreren Mikrosekunden. Das heißt, die Entscheidung über den Abbruch des Beaufschlagens mit zumindest einem Teil der Lichtintensitätsverteilung muss sehr schnell erfolgen und auch schnell umgesetzt werden. Dabei kann eine in einem FPGA programmierte Logik behilflich sein.

Eine erfindungsgemäße Vorrichtung zum hochauflösenden Abbilden einer mit Fluoreszenzmarkern markierte Struktur einer Probe weist Lichtbereitstellungseinrichtungen auf, die eine Lichtquelle und ein Objektiv umfassen und die eine ein Intensitätsmaximum von fokussiertem Fluoreszenzanregungslicht umfassende Lichtintensitätsverteilung ausbilden. Weiter weist die Vorrichtung Abtasteinrichtungen auf, die die Probe mit der Lichtintensitätsverteilung abtasten, sowie Detektionseinrichtungen, die das Objektiv und einen Detektor umfassen und ein Lichtsignal ausgeben, welches von einer für einen Ort der Lichtintensitätsverteilung mit dem Detektor registrierten Fluoreszenzlichtmenge abhängt. Beaufschlagungsunterbrechungseinrichtungen der Vorrichtung unterbrechen ein Beaufschlagen der Probe mit der Lichtintensitätsverteilung für den jeweiligen Ort in Abhängigkeit von dem Lichtsignal. Diese Beaufschlagungsunterbrechungseinrichtungen sind zur Durchführung des erfindungsgemäßen Verfahrens ausgebildet. Bis auf die Beaufschlagungsunterbrechungseinrichtungen, die insbesondere ein programmiertes FPGA und einen akusto-optischer Modulator umfassen, kann die erfindungsgemäße Vorrichtung einem STED-Fluoreszenzmikroskop, einem RESOLFT-Fluoreszenzmikroskop oder einem anderen Laser-Scanning-Mikroskop entsprechen.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist eine schematische Darstellung einer ersten Ausführungsform einer erfindungsgemäßen Vorrichtung.
- **Fig. 2**: ist eine schematische Darstellung einer zweiten Ausführungsform der erfindungsgemäßen Vorrichtung.
- **Fig. 3**: ist ein Blockdiagramm eines alle möglichen Ergänzungen umfassenden erfindungsgemäßen Verfahrens zum hochauflösenden Abbilden einer mit Fluoreszenzmarkern markierten Struktur einer Probe.
- **Fig. 4**: illustriert ein Vorgehen, wie ein Pixel der Probe als interessierender Teilbereich selektiert wird.
- **Fig. 5**: illustriert, wie bei dem Vorgehen gemäß Fig. 4 verschiedene Teilbereiche der Probe längs einer Abtastzeile als interessierende Teilbereiche selektiert werden.
- **Fig. 6**: illustriert ein anderes Vorgehen, wie interessierende Teilbereiche der Probe selektiert werden.
- **Fig. 7**: illustriert Kriterien für das Abbrechen des Beaufschlagens der Probe mit einer Lichtintensitätsverteilung an einem Ort in Abhängigkeit von der für den Ort registrierten Menge an Fluoreszenzlicht.
- **Fig. 8**: illustriert eine Optimierung der Abbruchkriterien gemäß Fig. 7 beim Abtasten der Probe in mehreren in z-Richtung hintereinander liegenden x-y-Ebenen.
- **Fig. 9**: illustriert eine lebende Zelle als Beispiel für eine Probe; und
- **Fig. 10**: zeigt vergrößert eine mit Fluoreszenzmarkern markierte Struktur der Zelle gemäß Fig. 9.

### FIGURENBESCHREIBUNG

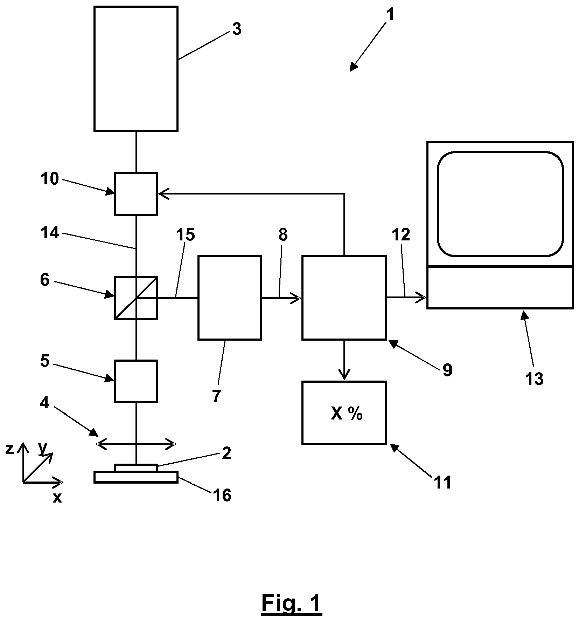

Die in **Fig. 1** dargestellte Vorrichtung 1 zum hochauflösenden Abbilden einer mit Fluoreszenzmarkern markierten Struktur einer Probe 2 weist Lichtbereitstellungseinrichtungen auf, die eine Lichtquelle 3 und ein Objektiv 4 umfassen und die eine Lichtintensitätsverteilung mit einem Intensitätsmaximum von fokussiertem Fluoreszenzanregungslicht 14 bereitstellen. Mit dieser Lichtintensitätsverteilung wird die Probe 2 beaufschlagt. Abtasteinrichtungen 5, die auch als Scanner bezeichnet werden, tasten die Probe 2 mit der Lichtintensitätsverteilung in x- und y-Richtung ab. Detektionseinrichtungen, die das Objektiv 4, einen dichroitischen Strahlteiler 6 als wellenlängenselektives Strahlablenkmittel und einen Detektor 7 umfassen, registrieren aus der Probe 2 emittiertes Fluoreszenzlicht 15 und geben ein Lichtsignal 8 aus, welches von dem für einen jeweiligen Ort der Lichtintensitätsverteilung registrierten Fluoreszenzlicht 15 abhängt. Das Lichtsignal 8 wird von Auswerteeinrichtungen 9 ausgewertet. Die Auswerteeinrichtung 9 steuern nach bestimmten Kriterien Beaufschlagungsabbrecheinrichtungen in Form eines akusto-optischen Modulators 10 an, um das Beaufschlagen der Probe 2 mit der Lichtintensitätsverteilung für den jeweiligen Ort abzubrechen, wenn bestimmte Kriterien erfüllt sind. Darüber hinaus wird die durch dieses vorzeitige Abbrechen des Beaufschlagens der Probe mit der Lichtintensitätsverteilung eingesparte Lichtdosis erfasst und auf Anzeigeeinrichtungen 11 als Prozentsatz einer fiktiven Lichtdosis angezeigt, die sich ergäbe, wenn die Probe 2 an allen Orten für einen gleichen vorgegebenen Zeitraum mit der Lichtintensitätsverteilung beaufschlagt würde. Die mit dem Abtasten der Probe 2 mit der Lichtintensitätsverteilung aufgenommenen Bilder der mit den Fluoreszenzmarkern markierten Struktur werden in Form von Bilddaten 12 an einen angeschlossenen Computer 13 weitergegeben. Dabei die Bilddaten 12 gegenüber den für die einzelnen Orte oder Pixel der Probe registrierten Lichtmengen des Fluoreszenzlichts in Hinblick auf die wegen des vorzeitigen Abbrechens des Beaufschlagens mit der Lichtintensitätsverteilung unterschiedlich langen Belichtungszeiten korrigiert. Es versteht sich, dass das Auswerten des Lichtsignals 8 abhängig von der Stellung der Abtasteinrichtungen 5 erfolgt. Die Abtasteinrichtungen 5 tasten die Probe 2 jedoch typischerweise nach einem von dem Lichtsignal 8 unabhängigen Schema ab. Grundsätzlich ist es aber auch möglich, die Abtasteinrichtungen 5 so auszubilden, dass sie als Beaufschlagungsabbrecheinrichtungen dienen können, in dem sie dann, wenn die Kriterien für das Abbrechen des Beaufschlagens der Probe mit der Lichtintensitätsverteilung für den jeweiligen Ort erfüllt sind, die Lichtintensitätsverteilung gegenüber der Probe 2 an den nächsten Ort verlagern. Ein Probenhalter 16, auf dem die Probe 2 gelagert ist, kann zum zusätzlichen Abtasten der Probe in z-Richtung, d. h. in Richtung der optischen Achse des Objektivs 4 höhenverfahrbar sein.

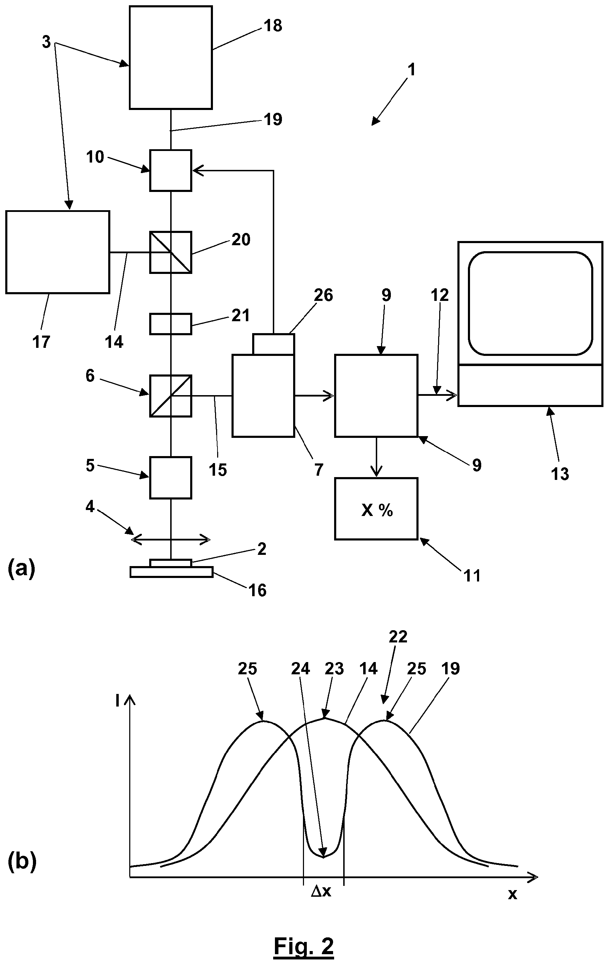

Die Ausführungsform der Vorrichtung 1 zum hochauflösenden Abbilden einer mit Fluoreszenzmarkern markierten Struktur einer Probe 2 gemäß **Fig. 2 (a)** weist als Teile der Lichtquelle 3 zwei Laser 17 und 18 für das Anregungslicht 14 bzw. für Fluoreszenzverhinderungslicht 19 auf. Mit einem Polarisationsstrahlteiler 20 werden das Anregungslicht 14 und das Fluoreszenzverhinderungslicht 19 zusammengeführt. Mit einer chromatischen Phasenplatte 21 werden selektiv die Phasenfronten des Fluoreszenzverhinderungslichts 19 so verformt, dass sich im Fokus des Objektivs 4 die in einem Schnitt in **Fig. 2 (b)** dargestellte Lichtintensitätsverteilung 22 mit den überlagerten Teillichtintensitätsverteilungen des Anregungslichts 14 und des Fluoreszenzverhinderungslichts 19 ergibt. Am Ort des Intensitätsmaximums 23 des Anregungslichts 14 weist das Fluoreszenzverhinderungslicht 19 ein Intensitätsminimum 24 auf, das von Intensitätsmaxima 25 des Fluoreszenzverhinderungslichts 19 umgeben ist. Auf diese Weise wird der Bereich, aus dem Fluoreszenzmarker in der Probe das Fluoreszenzlicht 15 emittieren können, effektiv auf einen Bereich Δx des Intensitätsminimums 24 eingegrenzt, in dem das Fluoreszenzverhinderungslicht 19 die Fluoreszenz nicht verhindert. Mit diesem Bereich Δx des Intensitätsminimums 24 des Fluoreszenzverhinderungslichts 19 wird die Probe 2 in der Vorrichtung 1 abgetastet. Dabei wird hier nur das Beaufschlagen der Probe 2 mit dem Fluoreszenzverhinderungslicht 19, das typischerweise und anders als in Fig. 2 (b) angedeutet eine sehr viel höhere Intensität als das Anregungslicht 14 aufweist, beim Vorliegen bestimmter Kriterien mit Hilfe des akusto-optischen Modulators 10 unterbrochen. Mit Hilfe des akusto-optischen Modulators 10 ist es auch möglich, das Fluoreszenzverhinderungslicht 19 erst nach dem Anregungslicht 14 an den jeweiligen Ort auf die Probe 2 zu richten, wie im Folgenden noch näher beschrieben werden wird. Das Ansteuern des akusto-optischen Modulators 10 zum Abbrechen des Beaufschlagens der Probe 2 an dem jeweiligen Ort mit dem Fluoreszenzverhinderungslicht 19 erfolgt hier über ein dem Detektor 7 zugeordnetes FPGA 26, in dem die Kriterien abgelegt sind. Das FPGA reagiert besonders schnell auf das Erfüllen der Kriterien, was bei Abtastzeiten von etwa einer Mikrosekunde pro Ort oder Pixel der Probe zwingend erforderlich ist.

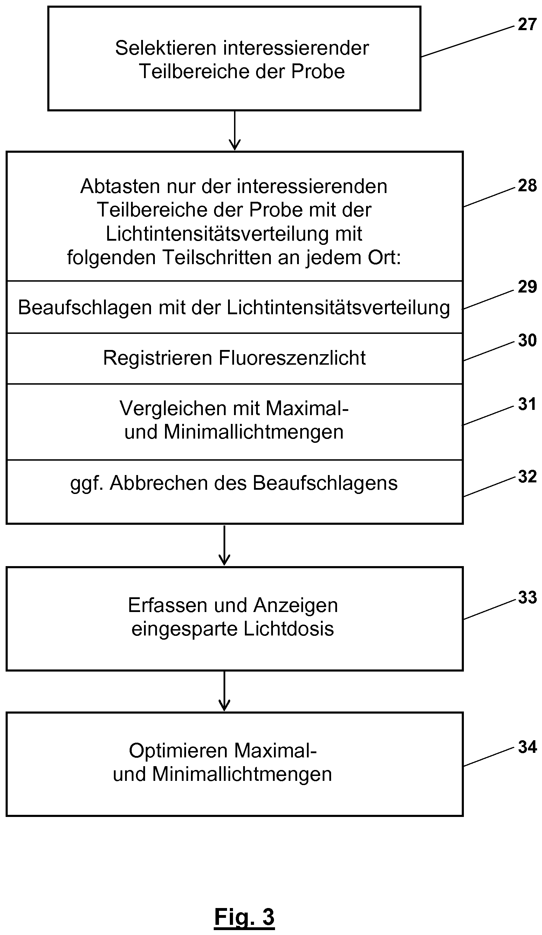

Der in **Fig. 3** als Blockdiagramm dargestellte Ablauf eines erfindungsgemäßen Verfahrens beginnt mit einem Schritt 27 des Selektierens interessierender Teilbereiche der Probe, die anschließend in einem Schritt 28 mit der vollen Lichtintensitätsverteilung abgetastet werden. Dabei werden an jedem Ort der Probe, d. h. bei jedem Abtastschritt die folgenden Teilschritte durchgeführt. In einem Teilschritt 29 wird die Probe mit der vollen Lichtintensitätsverteilung beaufschlagt. Dabei erfolgt in einem Teilschritt 30 das Registrieren des aus der Probe emittierten Fluoreszenzlichts, das mit der Lichtintensitätsverteilung hervorgerufen wird. In einem Teilschritt 31 wird das registrierte Fluoreszenzlicht 15 mit vorgegebenen Maximal- und Minimallichtmengen verglichen, wobei die Minimallichtmengen mit vorgegebenen Zeitspannen verknüpft sind. Abhängig von dem Vergleich kann in einem Teilschritt 32 das Beaufschlagen zumindest mit einem Teil der Lichtintensitätsverteilung abgebrochen werden. Durch vollständiges Abtasten der Probe bzw. der interessierenden Teilbereiche der Probe wird ein Bild der mit den Fluoreszenzmarkern markierten Struktur generiert. In einem Schritt 33 wird die Lichtdosis, die über die Probe hinweg durch das vorzeitige Abbrechen des Beaufschlagens mit der vollen Lichtintensitätsverteilung gegenüber gleichbleibenden Belichtungszeiten für jeden Ort der Probe, d. h. gegenüber gleichbleibenden effektiven Pixel Dwell Times, insgesamt eingespart wird, erfasst und angezeigt. Zur Maximierung der eingesparten Lichtdosis bei gleichzeitigem Erreichen einer gewünschten Bildqualität werden in einem nachfolgenden Schritt 34 die Vorgaben für die Maximal- und Minimallichtmengen sowie die zugehörigen Zeitspannen optimiert. Der Schritt 34 kann dabei auch ein sukzessives Absenken der Maximal- und Minimallichtmenge und/oder ein sukzessives Erhöhen der zugehörigen Zeitspannen umfassen, um einen fortschreitenden Rückgang der noch aktiven Fluoreszenzmarker in den interessierenden Teilbereichen der Probe zu kompensieren. Ein solcher fortschreitender Rückgang der Konzentration der Fluoreszenzmarker bleibt eine Folge der Beaufschlagung dieser Teilbereiche der Probe mit der vollen Lichtintensitätsverteilung, auch wird diese Beaufschlagung bei dem erfindungsgemäßen Verfahren möglichst schnell abgebrochen wird.

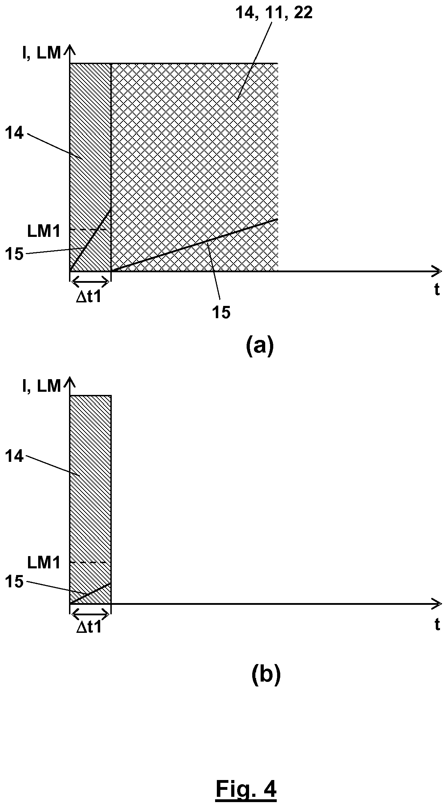

**Fig. 4** illustriert eine Möglichkeit der Ausführung des Schritts 27 gemäß Fig. 3, d. h. des Selektierens der interessierenden Teilbereiche der Probe. Hierzu wird die Probe an einem Ort für eine vorgegebene Testzeitspanne Δt1 nur mit dem Anregungslicht 14 beaufschlagt und geprüft, ob die Lichtmenge des Fluoreszenzlichts 15 binnen dieser Testzeitspanne Δt1 eine vorgegebene Mindestlichtmenge LM1 erreicht. Wenn dies der Fall ist, wie in Fig. 4 (a) angedeutet ist, wird der jeweilige Ort als interessierender Teilbereich der Probe selektiert. Wenn dies nicht der Fall ist, wie in Fig. 4 (b) illustriert ist, wird der jeweilige Ort der Probe nicht als interessierender Teilbereich der Probe selektiert. An einem Ort, der als interessierender Teilbereich der Probe selektiert wird, kann, wie in Fig. 4 (a) angedeutet ist, dem Anregungslicht 14 das Fluoreszenzverhinderungslicht 19 zugeschaltet werden. Dann wird das aus der Probe emittierte Fluoreszenzlicht 15, das jetzt nur noch aus dem räumlich begrenzten Bereich Δx gemäß Fig. 2 (b) stammen kann, erneut bei null beginnend registriert. Wenn hingegen der jeweilige Ort der Probe nicht als interessierender Teilbereich ermittelt wurde, unterbleibt an ihm jede weitere Beaufschlagung mit dem Anregungslicht 14 und/oder dem Fluoreszenzverhinderungslicht 19, wie dies in Fig. 4 (b) dargestellt ist.

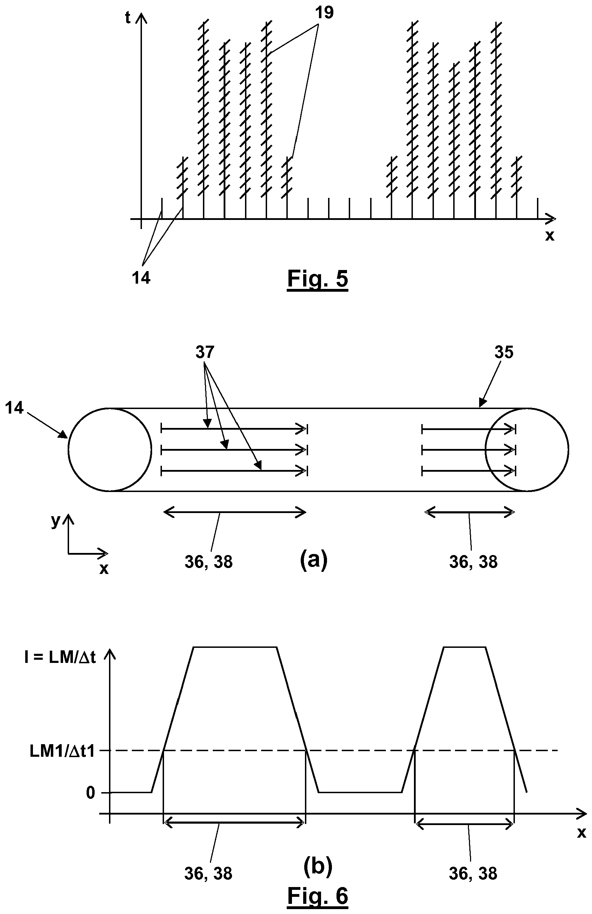

**Fig. 5** zeigt für eine in x-Richtung verlaufende Zeile von Orten oder Pixeln der Probe die Zeiten, für die die Probe an den einzelnen Orten oder Pixeln beim Abtasten mit dem Anregungslicht 14 und ggf. zusätzlich mit dem durch Schrägstriche angezeigten Fluoreszenzverhinderungslicht beaufschlagt wird. Dabei endet die gemeinsame Beaufschlagung mit dem Anregungslicht 14 und dem Fluoreszenzverhinderungslicht 19 nach unterschiedlichen Zeiten, was im Folgenden noch näher erläutert werden wird.

**Fig. 6** illustriert eine alternative Vorgehensweise beim Selektieren der interessierenden Teilbereiche der Probe im Schritt 27 gemäß Fig. 3. Hier wird die Probe längs einer Zeile 35 zunächst gemäß Fig. 6 (a) entlang einer in x-Richtung verlaufenden Zeile 35 mit dem fokussierten Anregungslicht 14 abgetastet. Dabei möge sich eine Intensität I des Fluoreszenzlichts 15 ergeben, wie sie in Fig. 6 (b) illustriert ist. Dort wo diese Intensität I den Quotienten LM1/Δt1 aus der vorgegebenen Mindestlichtmenge LM1 und der vorgegebenen Testzeitspanne Δt1 überschreitet, werden die entsprechenden Abschnitte 36 der Zeile 35 als interessierende Teilbereiche der Probe selektiert. In diesen Abschnitten 36 kann dann die Probe mit der vollen Lichtintensitätsverteilung gemäß Fig. 2 (b) längs Zeilen 37 abgetastet werden, die dichter nebeneinander liegenden als die Zeile 35 beim Abtasten nur mit dem fokussierten Anregungslicht 14 breit ist.

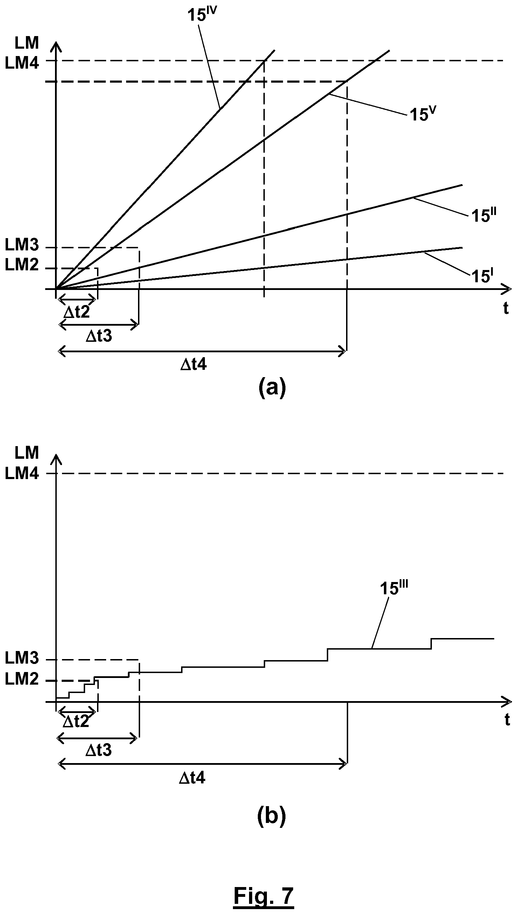

**Fig. 7** illustriert die Anwendung der Kriterien für das Abbrechen des Beaufschlagens der Probe an einem Ort mit der vollen Lichtintensitätsverteilung, wobei diese Lichtintensitätsverteilung eine solche mit Fluoreszenzverhinderungslicht 19 gemäß Fig. 2 (b) sein kann oder eine solche nur aus Anregungslicht 14. Wenn das Fluoreszenzlicht 15, das aus der Probe registriert wird, binnen einer vorgegebenen Zeitspanne Δt2 eine vorgegebene Minimallichtmenge LM2 nicht erreicht, wird das Beaufschlagen der Probe mit der Lichtintensitätsverteilung für diesen Ort beendet. Dies ist sowohl dann der Fall, wenn das registrierte Fluoreszenzlicht 15' gemäß Fig. 7 (a) nur im Bereich des Dunkelrauschens liegt, als auch dann, wenn das Fluoreszenzlicht 15" zwar auf Fluoreszenzmarker an dem jeweiligen Ort der Probe hinweist, aber nur auf ein sporadisches Vorkommen, das nicht von Bedeutung ist. Das Beaufschlagen der Probe mit der Lichtintensitätsverteilung wird für den jeweiligen Ort auch dann beendet, wenn innerhalb einer weiteren vorgegebenen Zeitspanne Δt3 eine weitere vorgegebene Minimallichtmenge LM3 nicht erreicht wird. Hiermit können Verläufe des Fluoreszenzlichts 15"', wie in Fig. 7 (b) dargestellt als uninteressant erkannt werden, bei denen zwar die vorgegebene Minimallichtmenge LM2 in der vorgegebenen Zeitspanne Δt2 erreicht wird, aber nur zufällig und nicht aufgrund einer gleichmäßig hohen Fluoreszenzaktivität an dem jeweiligen Ort der Probe. Außerdem wird die Beaufschlagung der Probe an dem jeweiligen Ort abgebrochen, wenn vor dem Erreichen eines vorgegebenen Zeitraums Δt4 eine Maximallichtmenge LM4 von dem Fluoreszenzlicht 15^{IV} erreicht ist, wie in Fig. 7 (a) skizziert ist. Nur wenn diese Maximallichtmenge LM4 bis zum Ende des Zeitraums Δt4 nicht erreicht wird, wird die Probe an dem jeweiligen Ort über den gesamten Zeitraum Δt4 mit der Lichtintensitätsverteilung beaufschlagt und die in diesem Zeitraum Δt4 anfallende Lichtmenge des Fluoreszenzlichts 15^{V} erfasst, wie in Fig. 7 (a) gezeigt ist. Es versteht sich, dass das Maß für die Konzentration der Fluoreszenzmarker an dem jeweiligen Ort der Probe der Quotient aus der Lichtmenge LM des Fluoreszenzlichts 15 und der zugehörigen Zeitspanne bzw. dem zugehörigen Zeitraum Δt4 ist.

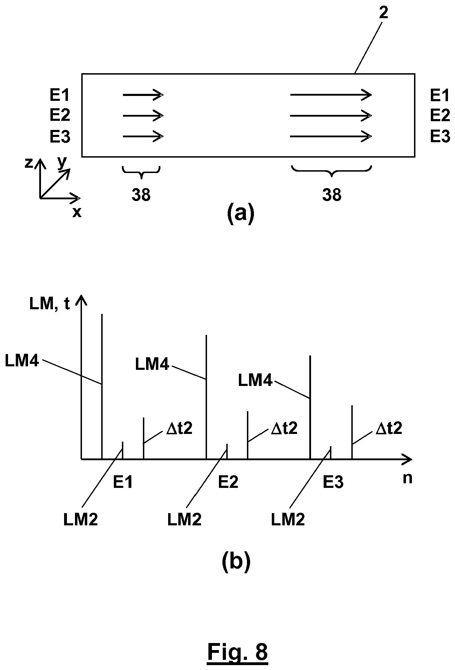

**Fig. 8 (a)** zeigt die Probe 2, wie sie nacheinander längs in z-Richtung beabstandeten Ebenen E1, E2 und E3 in interessierenden Bereichen 38 abgetastet wird. Dabei werden die Fluoreszenzmarker in den jeweils folgenden Ebenen bereits beim Abtasten der darüber liegenden Ebenen mit Fluoreszenzverhinderungslicht beaufschlagt und damit anteilig geblichen. Um dies zu kompensieren, werden für die nachfolgenden Ebenen E2 und E3 die Maximallichtmenge LM4 und die Minimallichtmenge LM2 reduziert bzw. die zu der Minimallichtmenge LM2 zugehörige Zeitspanne Δt2 erhöht, wie in **Fig. 8 (b)** dargestellt ist.

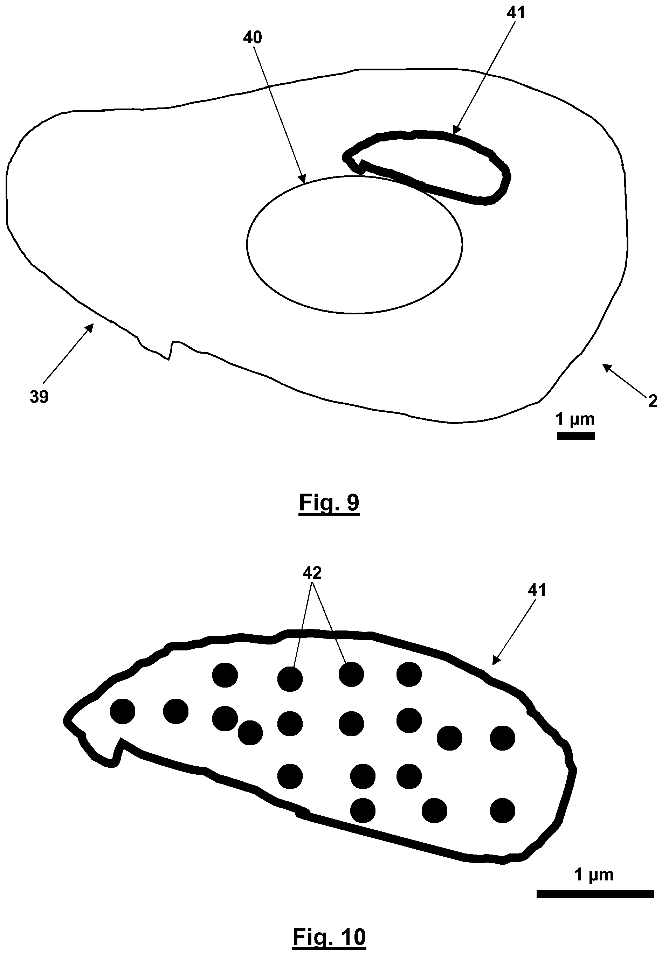

**Fig. 9** illustriert als Beispiel für eine Probe 2 bzw. einen Teil einer Probe 2 eine Zelle 39 mit einem Zellkern 40 und einer Struktur 41, die mit Fluoreszenzmarkern markiert ist. Dabei wird nur der Bereich der Struktur 41 erfindungsgemäß als interessierender Bereich der Probe 2 selektiert und zumindest vorübergehend mit der vollen Lichtintensitätsverteilung beaufschlagt. Alle anderen Bereiche der Probe 2 werden nur mit dem Anregungslicht beaufschlagt, bis festgestellt ist, dass die Mindestlichtmenge LM1 in der Testzeitspanne Δt1 nicht erreicht wird. Das heißt, die Lichtdosis, mit der alle Bereiche der Probe 2 bis auf den interessierenden Bereich der Struktur 41 belastet werden, ist nur minimal.

**Fig. 10** zeigt vergrößert den Bereich der Struktur 41, in dem bestimmte Proteine 42 mit Fluoreszenzmarkern markiert sind. Nur an den Orten der Proteine 42 wird die Probe im Bereich der Struktur 41 länger als Δt2 oder Δt3 mit der vollen Lichtintensitätsverteilung beaufschlagt. Überall außerhalb dieser Orte wird das Beaufschlagen schnell abgebrochen, weil die Minimallichtmenge LM2 innerhalb der Zeitspanne Δt2 oder die weitere Minimallichtmenge LM3 binnen der Zeitspanne Δt3 nicht erreicht wird. Auch an den Orten der Proteine 42 wird die Probe nur selten für den vollen Zeitraum Δt4 mit der vollen Lichtintensitätsverteilung beaufschlagt, weil das Abbrechen beim Erreichen der Maximallichtmenge LM4 vor dem Ende des Zeitraums Δt4 erfolgt. Die Lichtdosis, mit der die Probe im Bereich der Struktur 41 beaufschlagt wird, ist also selbst an den Orten der Proteine 42, die mit Fluoreszenzmarkern markiert sind, deutlich reduziert. Wenn es sich bei der Zelle 39 gemäß Fig. 9 um eine lebende Zelle handelt, wird diese beim erfindungsgemäßen Abbilden der Probe in ihrer biologischen Aktivität nur geringfügig durch photochemische Prozesse infolge der Einwirkung der Lichtintensitätsverteilung beeinträchtigt, zumal der Bereich des Kerns 40 der Zelle 39 nur mit der Minimallichtdosis beaufschlagt wird, die benötigt wird, um zu erkennen, dass es sich hierbei gemäß der vorliegenden Erfindung um keinen interessierenden Teilbereich der Probe handelt.

Das erfindungsgemäße Verfahren kann auch parallel mit mehreren Lichtintensitätsverteilungen durchgeführt werden, wobei die Schritte des erfindungsgemäßen Verfahrens dann grundsätzlich für jede der Lichtintensitätsverteilungen separat durchzuführen sind.

### BEZUGSZEICHENLISTE

- 1: Vorrichtung
- 2: Probe
- 3: Lichtquelle
- 4: Objektiv
- 5: Abtasteinrichtungen
- 6: dichroitischer Strahlteiler
- 7: Detektor
- 8: Lichtsignal
- 9: Auswerteeinrichtungen
- 10: akusto-optischer Modulator
- 11: Anzeigeeinrichtungen
- 12: Bilddaten
- 13: Computer
- 14: Anregungslicht
- 15: Fluoreszenzlicht
- 16: Probenhalter
- 17: Laser
- 18: Laser
- 19: Fluoreszenzverhinderungslicht
- 20: Polarisationsstrahlteiler
- 21: chromatische Phasenplatte
- 22: Lichtintensitätsverteilung
- 23: Maximum
- 24: Minimum
- 25: Maximum
- 26: Field Programmable Gate Array (FPGA)
- 27: Schritt
- 28: Schritt
- 29: Teilschritt
- 30: Teilschritt
- 31: Teilschritt
- 32: Teilschritt
- 33: Schritt
- 34: Schritt
- 35: Zeile
- 36: Abschnitt
- 37: Zeile
- 38: interessierender Teilbereich
- 39: Zelle
- 40: Zellkern
- 41: Struktur
- 42: Protein
- E1: Ebene
- E2: Ebene
- E3: Ebene
- t: Zeit
- I: Intensität
- LM: Lichtmenge
- Δt1: Testzeitspanne
- Δt2: Zeitspanne
- Δt3: weitere Zeitspanne
- Δt4: Zeitraum
- LM1: Mindestlichtmenge
- LM2: Minimallichtmenge
- LM3: weitere Minimallichtmenge
- LM4: Maximallichtmenge

## Patentansprüche

1. Verfahren zum hochauflösenden Abbilden einer mit Fluoreszenzmarkern markierten Struktur (41) einer Probe (2),
- wobei die Probe (2) mit einer Lichtintensitätsverteilung (22) beaufschlagt wird, bei der ein Intensitätsmaximum (23) von fokussiertem Fluoreszenzanregungslicht (14) mit einem von Intensitätsmaxima (25) umgebenen Intensitätsminimum (24) von fokussiertem Fluoreszenzverhinderungslicht (19) überlagert ist,
- wobei selektiv interessierende Teilbereiche (38) der Probe (2) mit dem Intensitätsminimum (24) des fokussierten Fluoreszenzverhinderungslichts (19) abgetastet werden, wobei aus der Probe (2) emittiertes Fluoreszenzlicht (15) registriert und dem jeweiligen Ort des Intensitätsminimums (24) des fokussierten Fluoreszenzverhinderungslichts (19) in der Probe (2) zugeordnet wird, und
- wobei zumindest das Beaufschlagen der Probe (2) mit dem fokussierten Fluoreszenzverhinderungslicht (19) der Lichtintensitätsverteilung (22) für den jeweiligen Ort des Intensitätsminimums (24) des fokussierten Fluoreszenzverhinderungslichts (19) abgebrochen wird,
- wenn eine vorgegebene Maximallichtmenge (LM4) des aus der Probe (2) emittierten Fluoreszenzlichts (15) registriert worden ist und/oder
- wenn binnen einer ersten vorgegebenen Zeitspanne (Δt2) eine vorgegebene Minimallichtmenge (LM2) des aus der Probe (2) emittierten Fluoreszenzlichts (15) noch nicht registriert worden ist,
**dadurch gekennzeichnet,**
- **dass** die Probe (2) mit dem fokussierten Fluoreszenzanregungslicht (14) in Schritten mit auf die Abmessungen des Intensitätsminimums (24) des fokussierten Fluoreszenzverhinderungslichts (19) abgestimmten Schrittweiten abgetastet wird, wobei aus der Probe (2) emittiertes Fluoreszenzlicht (15) registriert wird und wobei das Fluoreszenzverhinderungslicht (19) in jedem Schritt nur dann zugeschaltet wird, wenn eine vorgegebene Mindestlichtmenge (LM1) des aus der Probe (2) emittierten Fluoreszenzlichts (15) binnen einer vorgegebenen zweiten Testzeitspanne (Δt1) registriert worden ist.

2. Verfahren zum hochauflösenden Abbilden einer mit Fluoreszenzmarkern markierten Struktur (41) einer Probe (2),
- wobei die Probe (2) mit einer Lichtintensitätsverteilung (22) beaufschlagt wird, bei der ein Intensitätsmaximum (23) von fokussiertem Fluoreszenzanregungslicht (14) mit einem von Intensitätsmaxima (25) umgebenen Intensitätsminimum (24) von fokussiertem Fluoreszenzverhinderungslicht (19) überlagert ist,
- wobei selektiv interessierende Teilbereiche (38) der Probe (2) mit dem Intensitätsminimum (24) des fokussierten Fluoreszenzverhinderungslichts (19) abgetastet werden, wobei aus der Probe (2) emittiertes Fluoreszenzlicht (15) registriert und dem jeweiligen Ort des Intensitätsminimums (24) des fokussierten Fluoreszenzverhinderungslichts (19) in der Probe (2) zugeordnet wird, und
- wobei zumindest das Beaufschlagen der Probe (2) mit dem fokussierten Fluoreszenzverhinderungslicht (19) der Lichtintensitätsverteilung (22) für den jeweiligen Ort des Intensitätsminimums (24) des fokussierten Fluoreszenzverhinderungslichts (19) abgebrochen wird,
- wenn eine vorgegebene Maximallichtmenge (LM4) des aus der Probe (2) emittierten Fluoreszenzlichts (15) registriert worden ist und/oder
- wenn binnen einer vorgegebenen ersten Zeitspanne (Δt2) eine vorgegebene Minimallichtmenge (LM2) des aus der Probe (2) emittierten Fluoreszenzlichts (15) noch nicht registriert worden ist,
**dadurch gekennzeichnet,**
- **dass** die interessierenden Teilbereiche (38) der Probe (2) selektiert werden, indem das fokussierte Fluoreszenzanregungslicht (14) zunächst ohne das Fluoreszenzverhinderungslicht (19) direkt nacheinander auf in einer Abtastrichtung beim Abtasten der Probe (2) hintereinander liegende Teilbereiche der Probe (2) gerichtet wird, wobei aus der Probe (2) emittiertes Fluoreszenzlicht (15) registriert wird und wobei die Teilbereich der Probe (2) als interessierende Teilbereiche (38) definiert werden, wenn für diese binnen einer vorgegebenen zweiten Testzeitspanne (Δt1)eine vorgegebene Mindestlichtmenge (LM1) des aus der Probe (2) emittierten Fluoreszenzlichts (15) registriert worden ist, und dass die Probe (2) anschließend über die in der Abtastrichtung hintereinander liegenden Teilbereiche hinweg abgetastet wird, wobei ein Beaufschlagen der Probe (2) zumindest mit dem fokussierten Fluoreszenzverhinderungslicht (19) der Lichtintensitätsverteilung (22) nur in den interessierenden Teilbereichen (38) erfolgt.

3. Verfahren nach Anspruch 2, **dadurch gekennzeichnet, dass** jeweils eine Zeile (35) der Probe (2) zunächst nur mit dem fokussierten Fluoreszenzanregungslicht (14) abgetastet wird und dass dann Abschnitte (36) der Zeile (35), für die binnen der vorgegebenen zweiten Testzeitspanne (Δt1) die vorgegebene Mindestlichtmenge (LM1) des aus der Probe (2) emittierten Fluoreszenzlichts (15) registriert worden ist, mit dem fokussierten Fluoreszenzanregungslicht (14) und Fluoreszenzverhinderungslicht (19) abgetastet werden, während für alle anderen Abschnitte der Zeile (35) zumindest das Fluoreszenzverhinderungslicht (14) ausgeblendet wird, wobei die Abschnitte (36) der Zeile (35) der Probe (2) beim Abtasten mit dem fokussierten Fluoreszenzanregungslicht (14) und Fluoreszenzverhinderungslicht (19) optional in mehreren quer zu der Abtastrichtung nebeneinander liegenden Zeilen (37) abgetastet werden.

4. Verfahren nach einem der Ansprüche 2 und 3, **dadurch gekennzeichnet, dass** das zum Selektieren der interessierenden Teilbereiche (38) der Probe (2) verwendete Fluoreszenzanregungslicht eine andere Wellenlänge aufweist als das Fluoreszenzanregungslicht (14), das mit dem Fluoreszenzverhinderungslicht (19) zu der Lichtintensitätsverteilung (22) überlagert wird.

5. Verfahren nach einem der vorhergehenden Ansprüche, **dadurch gekennzeichnet, dass** zumindest das Beaufschlagen der Probe (2) mit dem Teil der Lichtintensitätsverteilung (22) für den jeweiligen Ort auch abgebrochen wird, wenn binnen mindestens einer vorgegebenen weiteren dritten Zeitspanne (Δt3), die länger als die erste Zeitspanne (Δt2) ist, eine weitere vorgegebene Minimallichtmenge (LM3) des aus der Probe (2) emittierten Fluoreszenzlichts (15), die größer als die vorgegebene Minimallichtmenge (LM2) ist, noch nicht registriert worden ist.

6. Verfahren nach Anspruch 5, **dadurch gekennzeichnet, dass** zumindest das Beaufschlagen der Probe (2) mit einem Teil der Lichtintensitätsverteilung (22) für den jeweiligen Ort auch abgebrochen wird, wenn eine vorgegebene Maximallichtmenge (LM4) des aus der Probe (2) emittierten Fluoreszenzlichts (15) registriert worden ist.

7. Verfahren nach einem der vorhergehenden Ansprüche, **dadurch gekennzeichnet, dass** über mehrere Wiederholungen des Abtastens der interessierenden Teilbereiche (38) und/oder über mehrere nacheinander abgetastete x-y-Ebenen der Probe (2), die unterschiedliche z-Lagen aufweisen, hinweg mindestens eine der vorgegebenen Maximal- und/oder Minimallichtmengen (LM2, LM3, LM4) reduziert und/oder die zugehörige vorgegebene erste und/oder dritte Zeitspanne (Δt2, Δt3) erhöht wird.

8. Verfahren nach Anspruch 7, **dadurch gekennzeichnet, dass** die mindestens eine der vorgegebenen Maximal- und/oder Minimallichtmengen (LM1, LM2, LM3) gemäß einer Exponentialfunktion reduziert und/oder die zugehörige vorgegebene erste und/oder dritte Zeitspanne (Δt2, Δt3) gemäß einer Exponentialfunktion erhöht wird.

9. Verfahren nach einem der vorhergehenden Ansprüche, **dadurch gekennzeichnet, dass** eine Lichtdosis erfasst und angezeigt wird, die durch das Abbrechen des Beaufschlagens der Probe (2) mit zumindest einem Teil der Lichtintensitätsverteilung (22) an dem jeweiligen Ort und/oder durch ein Nichtbeaufschlagen von nicht interessierenden Teilbereichen der Probe (2) mit der Lichtintensitätsverteilung (22) gegenüber einem Beaufschlagen der Probe (2) mit der Lichtintensitätsverteilung über alle Orte der Probe für einen vorgegebenen vierten Zeitraum (Δt4) eingespart wird.

10. Verfahren nach einem der vorhergehenden Ansprüche, **dadurch gekennzeichnet, dass** die oder eine Lichtdosis, die durch das Abbrechen des Beaufschlagens der Probe (2) mit zumindest einem Teil der Lichtintensitätsverteilung (22) für den jeweiligen Ort und/oder durch ein Nichtbeaufschlagen von nicht interessierenden Teilbereichen der Probe (2) mit der Lichtintensitätsverteilung (22) gegenüber einem Beaufschlagen der Probe (2) mit der Lichtintensitätsverteilung (22) an jedem Ort für einen vorgegebenen vierten Zeitraum (Δt4) eingespart wird, erfasst und durch Abstimmen mindestens einer der vorgegebenen Minimal- und/oder Maximallichtmengen (LM2, LM3, LM4) und/oder der zugehörigen vorgegebenen ersten und/oder dritten Zeitspanne (Δt2, Δt3) optimiert wird.

11. Verfahren nach einem der vorhergehenden Ansprüche, **dadurch gekennzeichnet, dass** mindestens eine der vorgegebenen Minimal- und/oder Maximallichtmengen (LM2, LM3, LM4) und/oder die zugehörige vorgegebene ersten und/oder dritten Zeitspanne (Δt2, Δt3) abhängig davon festgelegt wird, wie groß eine Lichtleistung des für benachbarte Orte der Lichtintensitätsverteilung (22) registrierten Fluoreszenzlichts (15) ist, und/oder dass das Beaufschlagen der Probe (2) mit zumindest einem Teil der Lichtintensitätsverteilung (22) für den jeweiligen Ort, wenn es nicht zuvor abgebrochen wird, für einen vorgegebenen vierten Zeitraum (Δt4) durchgeführt wird.

12. Verfahren nach einem der vorhergehenden Ansprüche, **dadurch gekennzeichnet, dass** das Beaufschlagen der Probe (2) mit zumindest einem Teil der Lichtintensitätsverteilung (22) für den jeweiligen Ort abgebrochen wird, indem die Lichtintensitätsverteilung (22) gegenüber der Probe (2) verlagert wird oder indem das Beaufschlagen der Probe mit der Lichtintensitätsverteilung (22) insgesamt abgebrochen wird, wobei das Beaufschlagen der Probe (2) mit der Lichtintensitätsverteilung (22) optional durch Ansteuern mindestens eines akusto-optischen Modulators (10) unterbrochen wird.

13. Verfahren nach einem der vorhergehenden Ansprüche, **dadurch gekennzeichnet, dass** eine Entscheidung über das Abbrechen des Beaufschlagens der Probe (2) mit zumindest einem Teil der Lichtintensitätsverteilung (22) für den jeweiligen Ort von einer in einem FPGA (26) programmierten Logik gefällt wird.

14. Vorrichtung (1) zum hochauflösenden Abbilden einer mit Fluoreszenzmarkern markierten Struktur einer Probe (2), mit
- Lichtbereitstellungseinrichtungen, die eine Lichtquelle (3) und ein Objektiv (4) umfassen und die eine Lichtintensitätsverteilung (22) mit einem Lichtintensitätsmaximum (23) von fokussiertem Fluoreszenzanregungslicht (14) bereitstellen,
- Abtasteinrichtungen (5), die die Probe (2) mit der Lichtintensitätsverteilung (22) abtasten,
- Detektionseinrichtungen, die das Objektiv (4) und einen Detektor (7) umfassen und ein Lichtsignal (8) ausgeben, welches von mit dem Detektor (7) für einen jeweiligen Ort der Lichtintensitätsverteilung (22) registriertem Fluoreszenzlicht abhängt,
- Beaufschlagungsabbrecheinrichtungen, die bei Vorliegen vorgegebener Bedingungen ein Beaufschlagen der Probe (2) mit der Lichtintensitätsverteilung (22) für den jeweiligen Ort in Abhängigkeit von dem Lichtsignal (8) abrechen,
**dadurch gekennzeichnet, dass** die Beaufschlagungsabbrecheinrichtungen zur Durchführung des Verfahrens nach einem der vorhergehenden Ansprüche ausgebildet sind.

## Claims

1. Method of high-resolution imaging a structure (41) of a sample (2), the structure being marked with fluorescence markers,
- wherein the sample (2) is subjected to a light intensity distribution (22) in which an intensity maximum (23) of focused fluorescence excitation light (14) is superimposed with an intensity minimum (24) enclosed by intensity maxima (25) of focused fluorescence inhibition light (19),
- wherein selectively partial areas (38) of interest of the sample (2) are scanned with the intensity minimum (24) of the focused fluorescence inhibition light (19), wherein fluorescence light (15) emitted out of the sample (2) is registered and allocated to the respective location of the intensity minimum (24) of the focused fluorescence inhibition light (19) in the sample (2), and
- wherein at least the subjection of the sample (2) to the focused fluorescence inhibition light (19) of the light intensity distribution (22) is terminated for the respective location of the intensity minimum (24) of the focused fluorescence inhibition light (19),
- when a predetermined maximum light amount (LM4) of the fluorescence light (15) emitted out of the sample (2) has been registered, and/or
- if, within a predetermined first period of time (Δt2), a predetermined minimum light amount (LM2) of the fluorescence light (15) emitted out of the sample (2) has not yet been registered,
**characterised in**
- **that** the sample (2) is scanned with the focused fluorescence excitation light (14) in steps adjusted to the dimensions of the intensity minimum (24) of the focused fluorescence inhibition light (19), wherein fluorescence light (15) emitted out of the sample (2) is registered, and wherein the fluorescence inhibition light (19) is only switched on in each step, if a predetermined minimum light amount (LM1) of the fluorescence light (15) emitted out of the sample (2) has been registered within a predetermined second trial period of time (Δt1).

2. Method of high-resolution imaging a structure (41) of a sample (2), the structure being marked with fluorescence markers,
- wherein the sample (2) is subjected to a light intensity distribution (22) in which an intensity maximum (23) of focused fluorescence excitation light (14) is superimposed with an intensity minimum (24) enclosed by intensity maxima (25) of focused fluorescence inhibition light (19),
- wherein selectively partial areas (38) of interest of the sample (2) are scanned with the intensity minimum (24) of the focused fluorescence inhibition light (19), wherein fluorescence light (15) emitted out of the sample (2) is registered and allocated to the respective location of the intensity minimum (24) of the focused fluorescence inhibition light (19) in the sample (2), and
- wherein at least the subjection of the sample (2) to the focused fluorescence inhibition light (19) of the light intensity distribution (22) is terminated for the respective location of the intensity minimum (24) of the focused fluorescence inhibition light (19),
- when a predetermined maximum light amount (LM4) of the fluorescence light (15) emitted out of the sample (2) has been registered, and/or
- if, within a predetermined first period of time (Δt2), a predetermined minimum light amount (LM2) of the fluorescence light (15) emitted out of the sample (2) has not yet been registered,
**characterised in**
- **that** the partial areas (38) of interest of the sample (2) are selected in that the focused fluorescence excitation light (14) is directed onto the sample (2) at first without the fluorescence inhibition light (19), directly one after another to partial areas of the sample (2) which are located one after the other in a scanning direction in scanning the sample (2), wherein fluorescence light (15) emitted out of the sample (2) is registered, and wherein the partial area of the sample (2) are defined as a partial areas (38) of interest, if, within a predetermined second trial period of time (Δt1), a predetermined minimum light amount (LM1) of the fluorescence light (15) emitted out of the sample (2) has been registered for them; and that the sample (2) is afterwards scanned across the partial areas located one after the other in the scanning direction, wherein a subjection of the sample (2) at least to the focused fluorescence inhibiting light (19) of the intensity distribution (22) only occurs in the partial areas (38) of interest.

3. Method of claim 2, **characterised in that** each time a line (35) of the sample (2) is at first scanned with the focused fluorescence excitation light (14) only, and that then sections (36) of the line (35), for which within the predetermined second trial period of time (Δt1) the predetermined minimum light amount (LM1) of the fluorescence light (15) emitted out of the sample (2) has been registered, are scanned with the focused fluorescence excitation light (14) and fluorescence inhibition light (19), whereas for all other sections of the line (35) at least the fluorescence inhibition light (19) is turned off, wherein the sections (36) of the line (35) of the sample (2), in scanning with the focused fluorescence excitation light (14) and fluorescence inhibition light (19) are optionally scanned in a plurality of lines (37) arranged side by side perpendicular to the scanning direction.

4. Method of any of the claims 2 and 3, **characterised in that** the fluorescence excitation light used for selecting the partial areas (38) of interest of the sample (2) has another wavelength than the fluorescence excitation light (14) which is superimposed with the fluorescence inhibiting light (19) to form the light intensity distribution (22).

5. Method of any of the preceding claims, **characterised in that** at least the subjection of the sample (2) to the part of the light intensity distribution (22) is also terminated for the respective location, if, within a predetermined further third period of time (Δt3), which is longer than the first period of time (Δt2), a further predetermined minimum light amount (LM3) of the fluorescence light (15) emitted out of the sample (2), which is higher than the predetermined minimum light amount (LM2), has not yet been registered.

6. Method of claim 5, **characterised in that** at least the subjection of the sample (2) to a part of the light intensity distribution (22) is also terminated for the respective location, when a predetermined maximum light amount (LM4) of the fluorescence light (15) emitted out of the sample (2) has been registered.

7. Method of any of the preceding claims, **characterised in that**, over a plurality of repetitions of scanning the partial areas (38) of interest and/or over a plurality of scanned x-y planes of the sample (2), which have different z-positions and which are scanned one after the other, at least one of the predetermined maximum and/or minimum light amounts (LM2, LM3, LM4) is reduced and/or the associated predetermined first and/or third period of time (Δt2, Δt3) is increased.

8. Method of claim 7, **characterised in that** the at least one of the predetermined maximum and/or minimum light amounts (LM1, LM2, LM3) is reduced according to an exponential function and/or the associated predetermined first and/or third period of time (Δt2, Δt3) is increased according to an exponential function.

9. Method of any of the preceding claims, **characterised in that** a light dose is determined and indicated which has been saved due to terminating the subjection of the sample (2) to at least a part of the light intensity distribution (22) for the respective location and/or by not subjecting partial areas of no interest of the sample (2) to the light intensity distribution (22) as compared to a subjection of the sample (2) at each location to the light intensity distribution for a predetermined fourth period of time (Δt4).

10. Method of any of the preceding claims, **characterised in that** the or a light dose which has been saved by terminating the subjection of the sample (2) to at least a part of the light intensity distribution (22) for the respective location and/or by not subjecting partial areas of no interest of the sample (2) to the light intensity distribution (22) as compared to a subjection of the sample (2) at each location to the light intensity distribution (22) for a predetermined fourth period of time (Δt4) is determined and optimised by tuning at least one of the predetermined minimum and/or maximum light amounts (LM2, LM3, LM4) and/or the associated predetermined first and/or third period of time (Δt2, Δt3).

11. Method of any of the preceding claims, **characterised in that** at least one of the predetermined maximum and/or minimum light amounts (LM2, LM3, LM4) and/or the associated predetermined first and/or third period of time (Δt2, Δt3) is set depending on how high a light power of the fluorescence light (15) is, which is registered for neighbouring locations of the light intensity distribution (22), and/or that the subjection of the sample (2) to at least a part of the light intensity distribution (22) for the respective location, if not terminated before, is executed for a predetermined fourth period of time (Δt4).

12. Method of any of the preceding claims, **characterised in that** the subjection of the sample (2) to at least a part of the light intensity distribution (22) for the respective location is terminated in that the light intensity distribution (22) is shifted with regard to the sample (2) or **in that** the subjection of the sample to the light intensity distribution (22) is completely terminated, wherein the subjection of the sample (2) to the light intensity distribution (22) is optionally terminated by controlling at least one acousto-optical modulator (10).

13. Method of any of the preceding claims, **characterised in that** a decision with regard to terminating the subjection of the sample (2) to at least a part of the light intensity distribution (22) for the respective location is made by a logic programmed in an FPGA (26).

14. Apparatus (1) for high-resolution imaging a structure of a sample (2), the structure being marked with fluorescence markers, the apparatus comprising
- light providing devices which include a light source (3) and an objective lens (4) and which provide a light intensity distribution (22) having a light intensity maximum (23) of focused fluorescence excitation light (14),
- scanning devices (5) which scan the sample (2) with the light intensity distribution (22),
- detection devices which include the objective lens (4) and a detector (7) and put out a light signal (8) which depends on the fluorescence light registered by the detector (7) for the respective location of the light intensity distribution (22),
- subjection termination devices which terminate a subjection of the sample (2) to the light intensity distribution (22) for the respective location depending on the light signal (8), if predetermined conditions are met,
**characterised in that** the subjection termination devices are designed for executing the method according to any of the preceding claims.

## Revendications

1. Procédé de représentation à haute résolution d'une structure (41), marquée avec des marqueurs fluorescents, d'un échantillon (2),
- l'échantillon (2) étant illuminé avec une répartition d'intensité lumineuse (22) pour laquelle un maximum d'intensité (23) d'une lumière d'excitation de fluorescence (14) focalisée est superposé avec un minimum d'intensité (24) entouré de maxima d'intensité (25) d'une lumière empêchant la fluorescence (19) focalisée,
- des parties intéressantes (38) de l'échantillon (2) étant balayées avec le minimum d'intensité (24) de la lumière empêchant la fluorescence (19) focalisée, moyennant quoi, la lumière de fluorescence (15) émise à partir de l'échantillon (2) est enregistrée et attribuée à l'endroit correspondant du minimum d'intensité (24) de la lumière empêchant la fluorescence (19) focalisée dans l'échantillon (2) et
- au moins l'illumination de l'échantillon (2) avec la lumière empêchant la fluorescence (19) focalisée de la répartition d'intensité lumineuse (22) étant interrompue pour l'endroit correspondant du minimum d'intensité (24) de la lumière empêchant la fluorescence (19) focalisée,
- lorsqu'une quantité de lumière maximale (LM4) de la lumière de fluorescence (15) émise à partir de l'échantillon (2) a été enregistrée et/ou
- lorsque, dans une première période (Δt2) prédéterminée, une quantité de lumière minimale (LM2) de la lumière de fluorescence (15) émise à partir de l'échantillon (2) n'a pas encore été enregistrée,
**caractérisé en ce que**
- l'échantillon (2) est balayé avec la lumière d'excitation de fluorescence (14) focalisée par étapes avec des tailles de pas adaptées aux dimensions du minimum d'intensité (24) de la lumière empêchant la fluorescence (19) focalisée, moyennant quoi, la lumière de fluorescence (15) émise à partir de l'échantillon (2) est enregistrée et la lumière empêchant la fluorescence (19) n'est activée, à chaque étape, que lorsque une quantité de lumière minimale (LM1) de la lumière de fluorescence (15) émise à partir de l'échantillon (2) a été enregistrée dans une deuxième période de test (Δt1) prédéterminée.

2. Procédé de représentation à haute résolution d'une structure (41), marquée à l'aide de marqueurs fluorescents, d'un échantillon (2),
- l'échantillon (2) étant illuminé avec une répartition d'intensité lumineuse (22) pour laquelle un maximum d'intensité (23) d'une lumière d'excitation de fluorescence (14) focalisée est superposé avec un minimum d'intensité (24) entouré de maxima d'intensité (25) d'une lumière empêchant la fluorescence (19) focalisée,
- des parties intéressantes (38) de l'échantillon (2) étant balayées avec le minimum d'intensité (24) de la lumière empêchant la fluorescence (19) focalisée, moyennant quoi, la lumière de fluorescence (15) émise à partir de l'échantillon (2) est enregistrée et attribuée à l'endroit correspondant du minimum d'intensité (24) de la lumière empêchant la fluorescence (19) focalisée dans l'échantillon (2) et
- au moins l'illumination de l'échantillon (2) avec la lumière empêchant la fluorescence (19) focalisée de la répartition d'intensité lumineuse (22) étant interrompue pour l'endroit correspondant du minimum d'intensité (24) de la lumière empêchant la fluorescence (19) focalisée,
- lorsqu'une quantité de lumière maximale (LM4) de la lumière de fluorescence (15) émise à partir de l'échantillon (2) a été enregistrée et/ou
- lorsque, dans une première période (Δt2) prédéterminée, une quantité de lumière minimale (LM2) de la lumière de fluorescence (15) émise à partir de l'échantillon (2) n'a pas encore été enregistrée,
**caractérisé en ce que**
- les parties intéressantes (38) de l'échantillon (2) sont sélectionnées grâce au fait que la lumière d'excitation de la fluorescence (14) focalisée est dirigée d'abord sans la lumière empêchant la fluorescence (19) directement successivement sur des parties de l'échantillon (2) se trouvant les unes derrière les autres dans une direction de balayage de l'échantillon (2), moyennant quoi, la lumière de fluorescence (15) émise à partir de l'échantillon (2) est enregistrée et les parties de l'échantillon (2) sont définies comme des parties intéressantes (38) lorsque, pour celles-ci, dans la deuxième période de test (Δt1) prédéterminée, une quantité de lumière minimale (LM1) de la lumière de fluorescence (15) émise à partir de l'échantillon (2) a été enregistrée, et **en ce que** l'échantillon (2) est ensuite balayé sur toutes les parties se trouvant les unes derrière les autres dans la direction de balayage, une illumination de l'échantillon (2) ayant lieu au moins avec la lumière empêchant la fluorescence (19) focalisée de la répartition d'intensité lumineuse (22) uniquement dans les parties intéressantes (38.

3. Procédé selon la revendication 2, **caractérisé en ce qu'**une ligne (35) de l'échantillon (2) est d'abord balayée uniquement avec la lumière d'excitation de la fluorescence (14) focalisée **en ce que**, ensuite, les portions (36) de la ligne (35), pour lesquelles, dans la deuxième période de test (Δt1) prédéterminée, la quantité de lumière minimale (LM1) de la lumière de fluorescence (15) émise à partir de l'échantillon (2) a été enregistrée, sont balayées avec la lumière d'excitation de la fluorescence (14) focalisée et la lumière empêchant la fluorescence (19) focalisée, tandis que, pour toutes les autres portions de la ligne (35), au moins la lumière empêchant la fluorescence (14) est masquée, les portions (36) de la ligne (35) de l'échantillon (2) étant balayées avec la lumière d'excitation de la fluorescence (14) focalisée et la la lumière empêchant la fluorescence (19) en option dans plusieurs lignes (37) juxtaposées transversalement par rapport à la direction de balayage.

4. Procédé selon l'une des revendications 2 et 3, **caractérisé en ce que** la lumière d'excitation de la fluorescence utilisée pour la sélection des parties intéressantes (38) de l'échantillon (2) présente une longueur d'onde différente de la lumière d'excitation de la fluorescence (14) qui est superposée avec la lumière empêchant la fluorescence (19) afin d'obtenir la répartition d'intensité lumineuse (22).

5. Procédé selon l'une des revendications précédentes, **caractérisé en ce qu'**au moins l'illumination de l'échantillon (2) avec la partie de la répartition d'intensité lumineuse (22) pour l'endroit correspondant est également interrompue lorsque, dans au moins une troisième période (Δt3) prédéterminée, qui est plus longue que la première période (Δt2), une autre quantité de lumière minimale (LM3) prédéterminée de la lumière de fluorescence (15) émise à partir de l'échantillon (2), qui est supérieure à la quantité de lumière minimale (LM2) prédéterminée, n'a pas encore été enregistrée.

6. Procédé selon la revendication 5, **caractérisé en ce qu'**au moins l'illumination de l'échantillon (2) avec une partie de la répartition d'intensité lumineuse (22) pour l'endroit correspondant est également interrompue lorsqu'une quantité de lumière maximale (LM4) prédéterminée de la lumière de fluorescence (15) émise à partir de l'échantillon (2) a été enregistrée.

7. Procédé selon l'une des revendications précédentes, **caractérisé en ce que**, grâce à plusieurs répétitions du balayage des parties intéressante (38) et/ou grâce au balayage successif de plusieurs plans x-y de l'échantillon (2), qui comprennent différentes couches z, au moins une des quantités de lumière maximales et/ou minimales (LM2, LM3, LM4) prédéterminées est diminuée et/ou la première et/ou la troisième période (Δt2, Δt3) prédéterminée correspondante est augmentée.

8. Procédé selon la revendication 7, **caractérisé en ce que** l'au moins une des quantités de lumière maximales et/ou minimales (LM1, LM2, LM3) est diminuée selon une fonction exponentielle et/ou la première et/ou la troisième période (Δt2, Δt3) prédéterminée correspondante est augmentée selon une fonction exponentielle.

9. Procédé selon l'une des revendications précédentes, **caractérisé en ce qu'**une dose de lumière, qui est économisée par l'interruption de l'illumination de l'échantillon (2) avec au moins une partie de la répartition d'intensité lumineuse (22) pour l'endroit correspondant et/ou par une non-illumination des parties non intéressantes de l'échantillon (2) avec la répartition d'intensité lumineuse (22) par rapport à une illumination de l'échantillon (2) avec la répartition d'intensité lumineuse sur tous les endroits de l'échantillon, pendant une quatrième période (Δt4) prédéterminée, est détectée et affichée.

10. Procédé selon l'une des revendications précédentes, **caractérisé en ce que** la ou une dose de lumière qui est économisée par l'interruption de l'illumination de l'échantillon (2) avec au moins une partie de la répartition d'intensité lumineuse (22) pour l'endroit correspondant et/ou par une non-illumination des parties non intéressantes de l'échantillon (2) avec la répartition d'intensité lumineuse (22) par rapport à une illumination de l'échantillon (2) avec la répartition d'intensité lumineuse (22) à chaque endroit, pendant une quatrième période (Δt4) prédéterminée, est détectée et optimisée par l'adaptation d'au moins une des quantités de lumière maximales et/ou minimales (LM2, LM3, LM4) prédéterminées et/ou de la première et/ou de la troisième période (Δt2, Δt3) prédéterminée correspondante.

11. Procédé selon l'une des revendications précédentes, **caractérisé en ce qu'**au moins une des quantités de lumière maximales et/ou minimales (LM2, LM3, LM4) prédéterminées et/ou la première et/ou de la troisième période (Δt2, Δt3) prédéterminée correspondante, est déterminée en fonction de la valeur d'une puissance lumineuse de la lumière de fluorescence (15) enregistrée pour des endroits adjacents de la répartition d'intensité lumineuse (22) et/ou **en ce que** l'illumination de l'échantillon (2) avec au moins une partie de la répartition d'intensité lumineuse (22) pour l'endroit correspondant est effectuée, lorsqu'elle n'est pas interrompue auparavant, pendant une quatrième période (Δt4) prédéterminée.

12. Procédé selon l'une des revendications précédentes, **caractérisé en ce que** l'illumination de l'échantillon (2) avec au moins une partie de la répartition d'intensité lumineuse (22) pour l'endroit correspondant est interrompue grâce au fait que la répartition d'intensité lumineuse (22) est déplacée par rapport à l'échantillon (2) ou grâce au fait que l'illumination de l'échantillon avec l'ensemble de la répartition d'intensité lumineuse (22) est interrompue, l'illumination de l'échantillon (2) avec la répartition d'intensité lumineuse (22) étant interrompue en option par le contrôle d'au moins un modulateur acousto-optique (10).

13. Procédé selon l'une des revendications précédentes, **caractérisé en ce qu'**une décision concernant l'interruption de l'illumination de l'échantillon (2) avec au moins une partie de la répartition d'intensité lumineuse (22) pour l'endroit correspondant est prise par une logique programmée dans un FPGA (26).

14. Dispositif (1) pour la représentation à haute résolution d'une structure, marquée par des marqueurs fluorescents, d'un échantillon (2), avec
- des dispositifs d'émission de lumière qui comprennent une source de lumière (3) et un objectif (4) et qui émettent une répartition d'intensité lumineuse (22) avec un maximum d'intensité lumineuse (23) d'une lumière d'excitation de la fluorescence (14) focalisée,
- des dispositifs de balayage (5) qui balayent l'échantillon (2) avec la répartition d'intensité lumineuse (22),
- des dispositifs de détection qui comprennent l'objectif (4) et un détecteur (7) et qui émettent un signal lumineux (8) qui dépend de la lumière de fluorescence enregistrée avec le détecteur (7) pour un endroit correspondant de la répartition d'intensité lumineuse (22),
- des dispositifs d'interruption d'illumination qui, lors de la présence de conditions prédéterminées, interrompent une illumination de l'échantillon (2) avec la répartition d'intensité lumineuse (22) pour l'endroit correspondant en fonction du signal lumineux (8),
**caractérisé en ce que** les dispositifs d'interruption d'illumination sont conçus pour l'exécution du procédé selon l'une des revendications précédentes.
